# FASCICULE DE BREVET EUROPEEN

(11) **EP 4 094 055 B1**
(45) Date de publication et mention de la délivrance du brevet: **14.10.2026**
(21) Numéro de dépôt: 21705249.7
(22) Date de dépôt: 18.01.2021
(51) Int. Cl.: G01S 7/02, G01F 23/284, G01F 23/292, G01F 23/296, G01S 7/481, G01S 17/08, G01S 17/88

(54) **DISPOSITIF CAPTEUR POUR MESURER LE NIVEAU DE MATIÈRE CONTENUE DANS UN CONTENEUR**
SENSORVORRICHTUNG ZUR MESSUNG DES FÜLLSTANDES EINES MATERIALS IN EINEM BEHÄLTER
SENSOR DEVICE FOR MEASURING THE LEVEL OF MATERIAL CONTAINED IN A CONTAINER

(30) Priorité: 24.01.2020 FR 2000705
(43) Date de publication de la demande: 30.11.2022
(73) Titulaire: Lesaffre et Compagnie, 75001 Paris (FR)
(72) Inventeur: COSSON, Thierry, 59370 MONS EN BAROEUL (FR); HOUQUE, Rudy, 59350 SAINT-ANDRE-LEZ-LILLE (FR); PICAVET, Florent, 59700 MARCQ EN BAROEUL (FR); QUIGUER, Peter, 59175 VENDEVILLE (FR)
(74) Mandataire: Plasseraud IP
(86) Numéro de dépôt international: PCT/FR2021/050088
(87) Numéro de publication internationale: WO 2021/148749

(56) Documents cités:
- EP-A1- 3 598 081
- EP-B1- 2 265 909
- WO-A1-2010/003210
- DE-A1- 2 927 449
- US-A1- 2010 101 317
- US-A1- 2016 180 690
- US-A1- 2018 052 033
- US-B1- 6 259 516
- US-B1- 6 339 468
- US-B1- 6 782 122

## Description

### Domaine technique

La présente invention est relative à un dispositif capteur pour mesurer le niveau de matière dans un conteneur, et notamment de matière instable dont les caractéristiques évoluent au cours du temps, comme par exemple de la levure ou du levain, en particulier de la levure ou du levain liquide.

L'invention concerne également un ensemble comprenant un tel dispositif capteur et un moyen de raccordement à un conteneur.

L'invention concerne encore un système comprenant un tel ensemble et un conteneur.

L'invention concerne encore un procédé de nettoyage de l'intérieur de l'enveloppe externe d'un conteneur d'un tel système.

L'invention concerne enfin un procédé de suivi à distance d'informations relatives à un conteneur, ainsi qu'un circuit de traitement configuré pour exécuter un tel procédé et une unité de mémoire lisible par un processeur comprenant des instructions qui, lorsqu'elles sont exécutées par le processeur, conduisent celui-ci à mettre en œuvre un tel procédé.

### Technique antérieure

Les conteneurs contenant de la matière, et notamment de la matière instable, dont les caractéristiques évoluent au cours du temps, et notamment la levure ou du levain, en particulier la levure ou du levain liquide, sont généralement remplis dans une usine de production de ladite matière puis transportés jusqu'au lieu d'utilisation de ladite matière, par exemple chez un boulanger dans le cas de la levure ou du levain.

Afin de pouvoir utiliser à nouveau le conteneur, celui-ci, une fois vidé de la matière, est rapatrié chez le producteur de ladite matière pour être nettoyé et rempli à nouveau avec de la matière.

Ainsi, un producteur de ladite matière peut se retrouver avec un parc de conteneurs très important, et répartis à divers endroits sur une étendue géographique assez vaste, par exemple dans plusieurs pays, ou même sur plusieurs continents différents, ce qui complexifie la gestion de la logistique d'un tel parc de conteneurs.

Afin d'encourager les utilisateurs à renvoyer les conteneurs au producteur, il peut être prévu un système de consigne qui encourage financièrement les utilisateurs à retourner les conteneurs une fois vides, mais cette méthode ne donne pas entièrement satisfaction, beaucoup d'utilisateurs ne renvoyant pas le conteneur une fois vide, malgré la perte financière qu'ils subissent en retour.

Afin de faciliter la logistique des différents conteneurs de son parc, et de pouvoir surveiller l'utilisation des conteneurs contenant la matière produite, et notamment quand ledit parc comporte un nombre important de conteneurs répartis dans divers endroits sur une vaste étendue géographique (par exemple sur un ou plusieurs continents), il peut être avantageux pour le producteur de pouvoir bénéficier d'informations en temps réel sur chacun des conteneurs se trouvant chez les utilisateurs, et notamment sur le niveau de matière à l'intérieur du conteneur chez l'utilisateur ou encore sa position géographique précise.

Ainsi, il est par exemple possible d'engager automatiquement une action de rapatriement du conteneur vers l'usine de production dès que le niveau de matière à l'intérieur du conteneur passe sous un seuil déterminé, en se servant également de la position géographique du conteneur pour organiser de façon optimale son rapatriement, combinée éventuellement avec la livraison d'un nouveau conteneur contenant ladite matière.

Il est donc souhaitable pour un producteur de matière destinée à être convoyée et utilisée dans un conteneur par un utilisateur final de pouvoir bénéficier d'un dispositif permettant la détermination en temps réel d'informations relatives au conteneur, dans le but de pouvoir transmettre ces informations au producteur afin de faciliter la logistique dudit conteneur.

On connaît par exemple un dispositif capteur pour mesurer le niveau de matière dans un conteneur comprenant une enveloppe étanche recevant ladite matière, commercialisé par la société Nanolike ^{©}, et décrit en partie dans la demande de brevet WO 2018219683 A1.

Un tel dispositif capteur est prévu pour déterminer le niveau de matière dans un conteneur à partir de la mesure de la pression exercée par le conteneur sur un capteur de pression. A cet effet, le capteur de pression du dispositif capteur est prévu pour être positionné entre une paroi inférieure de l'enveloppe du conteneur et un support, comme par exemple une palette, recevant en appui ladite paroi inférieure de l'enveloppe, le capteur étant intercalé entre la paroi inférieure de l'enveloppe et le support. La pression mesurée par le capteur correspond ainsi sensiblement au poids du conteneur, duquel on peut déduire le volume de matière à l'intérieur de son enveloppe externe et donc le niveau de matière, en vue de transmettre une information relative à ce niveau de matière.

Un tel dispositif capteur présente plusieurs inconvénients.

Tout d'abord, son positionnement entre la paroi inférieure de l'enveloppe du conteneur et le support exige la présence systématique d'un support associé au conteneur. Or, pour certaines applications, par exemple lorsque le conteneur est prévu pour être stocké en étant suspendu, un tel support est absent et le positionnement d'un tel capteur s'avère donc impossible.

De plus, si on envisage son installation sur un conteneur existant, la position du capteur nécessite de procéder à la désolidarisation complète entre l'enveloppe du conteneur et le support, préalablement à sa mise en place, ce qui augmente sensiblement le temps nécessaire à son installation et le rend donc peu adapté pour être installé sur un conteneur existant, et encore plus sur tout un parc de conteneurs existant.

De la même manière, dans le cadre d'une opération de maintenance sur le dispositif capteur ou sur le conteneur, l'accès audit dispositif capteur ou sa désolidarisation de l'enveloppe du conteneur, nécessite également de procéder préalablement à la désolidarisation complète entre l'enveloppe du conteneur et le support, ce qui complexifie et augmente sensiblement le temps nécessaire aux opérations de maintenance.

Également, le capteur de pression du dispositif capteur est disposé dans un endroit peu accessible, ce qui peut compliquer sa maintenance, mais également nuire à sa capacité à pouvoir transmettre des données, par exemple par un réseau cellulaire, sa position empêchant le passage d'ondes radio, qui peuvent se trouver bloquer par certains éléments du conteneur.

Ainsi, pour procéder au nettoyage de l'enveloppe du conteneur, le dispositif capteur est généralement laissé solidaire de l'enveloppe et du support. Ainsi, il se retrouve soumis à des conditions sévères (pression, température, pH) lors desdites opérations de nettoyage du conteneur, qui peuvent nuire à sa durée de vie.

US 6 339 468 B1, US 6 259 516 B1, US 2016/180690 A1, WO 2010/003210 A1 divulguent aussi des dispositifs capteurs de l'état de la technique.

### Problème technique

L'objectif de l'invention est donc de pallier aux inconvénients des dispositifs capteur de l'état de la technique en proposant un dispositif capteur pour faciliter la logistique d'un conteneur, ou d'un parc comprenant une pluralité de conteneurs, et permettant notamment de mesurer le niveau de matière dans un conteneur, et pouvant être installé sur une grande variété, en terme de forme et de dimensions, de conteneurs.

Un autre but de la présente invention est de proposer un tel dispositif capteur pouvant être facilement et rapidement installé sur un conteneur préexistant.

Un autre but de la présente invention est de proposer un tel dispositif capteur dont la maintenance est facilitée, et facilitant également la maintenance du conteneur sur lequel il est installé.

Un autre but de la présente invention est de proposer un tel dispositif capteur pouvant facilement transmettre des données, et notamment par ondes radio.

Un autre but de la présente invention est de proposer un tel dispositif capteur avec une grande durée d'autonomie énergétique, notamment de plusieurs années.

Un autre but de la présente invention est de proposer un tel dispositif capteur de conception simple et de coût de revient réduit.

### Exposé de l'invention

Il est proposé un dispositif capteur pour mesurer le niveau de matière dans un conteneur, le conteneur comprenant une enveloppe étanche configurée pour contenir de la matière définissant une surface libre d'un liquide à l'intérieur de l'enveloppe, le dispositif capteur comprenant :
- une coque,
- au moins un capteur de niveau, sans contact, comprenant un émetteur configuré pour émettre un signal de détection, et un récepteur configuré pour recevoir un signal de détection réfléchi, le signal de détection réfléchi comprenant le signal de détection après réflexion, ledit capteur de niveau étant logé à l'intérieur de la coque.

Selon l'invention, la coque comporte une fenêtre de mesure autorisant le passage du signal de détection émis par ledit émetteur depuis l'intérieur de la coque vers l'intérieur de l'enveloppe du conteneur et le passage du signal de détection réfléchi, après réflexion contre la surface libre de la matière à l'intérieur de l'enveloppe du conteneur, depuis l'intérieur de l'enveloppe du conteneur vers ledit récepteur à l'intérieur de la coque.

Selon l'invention, le dispositif capteur comprend en outre un moyen de fixation solidaire de la coque, configuré de sorte à permettre la fixation amovible du dispositif capteur, à l'extérieur de l'enveloppe du conteneur, sur un moyen de raccordement solidaire d'une paroi de l'enveloppe du conteneur, avec la fenêtre de mesure de la coque positionnée en regard d'une ouverture correspondante ménagée dans la paroi de l'enveloppe du conteneur.

Selon l'invention, le capteur de niveau est configuré pour émettre un signal de mesure relatif au niveau de la matière à l'intérieur de l'enveloppe du conteneur en fonction du signal de détection réfléchi reçu par le récepteur. Selon l'invention, l'émetteur est configuré de sorte à émettre un signal de détection comportant une pluralité de rayons lumineux d'émission ayant avantageusement une origine commune au niveau de l'émetteur, au moins deux rayons lumineux d'émission présentant chacun une orientation différente par rapport audit émetteur, et notamment de sorte que l'ensemble des rayons lumineux d'émission forment sensiblement un cône d'origine, et de sorte que le signal de détection réfléchi reçu par le récepteur comporte une pluralité de rayons lumineux de détection réfléchis, chacun formé par un rayon lumineux d'émission du signal de détection émis par l'émetteur après au moins une réflexion contre une paroi de l'enveloppe du conteneur et/ou contre la surface libre de la matière à l'intérieur de l'enveloppe du conteneur.

Le récepteur comporte une pluralité d'unités de réception réparties de manière régulière sur une surface sensiblement plane orientée vers la fenêtre de mesure, et configuré de sorte à recevoir uniquement un seul rayon de détection réfléchi du signal de détection réfléchi, le récepteur étant configurée de sorte à émettre autant de signaux de mesure que d'unités de réception, éventuellement distincts, chacun déterminé en fonction du rayon de détection réfléchi unique reçu au niveau de chaque unité de réception.

Le signal de mesure émis par ledit capteur de niveau relatif au niveau de la matière à l'intérieur de l'enveloppe du conteneur étant déterminé en fonction des différentes signaux de mesure émis par le récepteur déterminés à partir des différentes unités de réception.

Selon des caractéristiques optionnelles de l'invention, prises seules ou en combinaison :
- le moyen de fixation comprend un taraudage entourant ladite fenêtre de mesure, le taraudage étant configuré pour coopérer par vissage/dévissage avec un filetage du moyen de raccordement, le filetage étant configuré pour entourer l'ouverture du conteneur ;
- ledit signal de détection émis par l'émetteur est un signal électromagnétique, optique ou ultrasonore ;
- le dispositif comprend en outre un moyen de géolocalisation, configuré pour émettre un signal permettant de déterminer la position géographique du dispositif capteur ;
- ladite coque comprend au moins un matériau thermoplastique, par exemple du polypropylène ;
- le dispositif comprend une interface utilisateur reliée audit capteur de niveau, l'interface utilisateur comprenant un affichage configuré de sorte à afficher une information relative au niveau de matière à l'intérieur de l'enveloppe du conteneur dépendante du signal de mesure émis par ledit capteur de niveau ;
- l'affichage comprend une pluralité de diodes électroluminescentes associées à une pluralité d'inscriptions et l'interface utilisateur comprend au moins un bouton d'actionnement, relié à l'affichage, le bouton d'actionnement étant configuré pour déclencher une mesure de niveau de la matière à l'intérieur de l'enveloppe du conteneur par le capteur de niveau et l'affichage d'une information relative au niveau de matière à l'intérieur de l'enveloppe du conteneur ;
- le dispositif comprend en outre un transmetteur de données, configuré de sorte à envoyer des données du capteur de niveau vers un serveur distant, les données comprenant des données relatives au niveau de matière à l'intérieur de l'enveloppe du conteneur établies à partir du signal de mesure émis par le capteur de niveau ;
- le transmetteur de données est configuré pour transmettre des données avec un serveur distant via un réseau cellulaire bas-débit, sur une bande de fréquence comprise entre 800 MHz et 1000 MHz ;
- le dispositif comprend en outre un capteur de température, configuré de sorte à mesurer la température environnante du dispositif.

L'invention concerne également un ensemble comprenant :
- un dispositif capteur selon l'invention,
- un moyen de raccordement, apte à être solidarisé à une paroi de l'enveloppe d'un conteneur.

Selon l'invention, le moyen de raccordement présente un perçage traversant prévu pour être positionné en regard et dans le prolongement d'une ouverture ménagée dans ladite paroi de l'enveloppe du conteneur.

Selon l'invention, le dispositif capteur est configuré pour être fixé de manière amovible sur le moyen de raccordement par l'intermédiaire de son moyen de fixation avec la fenêtre de mesure de sa coque en regard et dans le prolongement du perçage traversant du moyen de raccordement et de l'ouverture ménagée dans la paroi de l'enveloppe du conteneur, ledit perçage traversant étant configuré pour être traversé par le signal de détection émis par l'émetteur et par le signal de détection réfléchi destiné à être reçu par le récepteur.

Selon un mode de réalisation :
- le moyen de fixation du dispositif capteur comprend un taraudage entourant la fenêtre de mesure de la coque du dispositif capteur et
- le moyen de raccordement comporte un filetage entourant ledit perçage traversant, le filetage étant configuré pour entourer l'ouverture ménagée dans la paroi de l'enveloppe du conteneur, le filetage étant configuré pour coopérer avec ledit taraudage du moyen de fixation pour assurer la fixation amovible du dispositif capteur sur ledit moyen de raccordement par vissage/dévissage.

Selon un mode de réalisation, le moyen de raccordement comporte une première paroi d'arrêt et une deuxième paroi d'arrêt positionnée en face et sensiblement parallèle à la première paroi d'arrêt, et mobile en translation par rapport à la première paroi d'arrêt, la première paroi d'arrêt et la deuxième paroi d'arrêt étant configurées pour venir enserrer la paroi de l'enveloppe du conteneur afin d'assurer la fixation du moyen de raccordement à l'enveloppe du conteneur.

L'invention concerne également un système comprenant :
- un ensemble selon l'invention,
- un conteneur comportant une enveloppe étanche, l'enveloppe comprenant une paroi, l'enveloppe étant apte à contenir de la matière à l'intérieur, une ouverture étant ménagée dans la paroi de l'enveloppe, l'ouverture étant configurée pour mettre en relation l'intérieur et l'extérieur de l'enveloppe.

Selon l'invention, le moyen de raccordement est solidarisé à la paroi de l'enveloppe avec son perçage traversant en regard et dans le prolongement de l'ouverture du conteneur.

Selon l'invention, le dispositif capteur est fixé de manière amovible au moyen de raccordement avec sa fenêtre de mesure dans le prolongement du perçage traversant du moyen de raccordement et de l'ouverture du conteneur, de sorte que l'émetteur du capteur de niveau soit apte à émettre le signal de détection vers l'intérieur de l'enveloppe du conteneur et que le récepteur du capteur de niveau soit apte à recevoir ledit signal de détection réfléchi, après réflexion contre la surface libre de la matière à l'intérieur de l'enveloppe du conteneur.

Selon un mode de réalisation, l'ouverture est ménagée dans une paroi supérieure de l'enveloppe et le dispositif capteur est fixé sur une paroi supérieure de l'enveloppe du conteneur.

Selon un mode de réalisation, l'enveloppe du conteneur contient de la matière instable, la matière instable ayant des caractéristiques évoluant au cours du temps, et notamment de la levure ou du levain.

L'invention concerne également un procédé de nettoyage de l'enveloppe d'un conteneur d'un système selon l'invention, comprenant :
la désolidarisation du dispositif capteur du moyen de raccordement,
l'évacuation du dudit dispositif capteur,
le nettoyage de l'enveloppe à une température supérieure à 60°C.

L'invention concerne également un procédé de suivi à distance d'informations relatives à un conteneur comprenant une enveloppe étanche apte à contenir de la matière instable, la matière instable ayant des caractéristiques évoluant au cours du temps, à l'aide d'un dispositif capteur selon l'invention, le procédé comprenant :
la mesure du niveau de matière à l'intérieur de l'enveloppe du conteneur,
la génération de données représentatives du niveau de matière à l'intérieur de l'enveloppe du conteneur,
la transmission des données représentatives du niveau de matière à l'intérieur de l'enveloppe du conteneur.

L'invention concerne encore un circuit de traitement configuré pour exécuter un procédé de suivi d'informations relatives à un conteneur selon l'invention.

L'invention concerne enfin une unité de mémoire lisible par un processeur comprenant des instructions qui, lorsqu'elles sont exécutées par le processeur, conduisent celui-ci à mettre en œuvre le procédé de suivi d'informations relatives à un conteneur selon l'invention.

### Brève description des dessins

D'autres caractéristiques, détails et avantages de l'invention apparaîtront à la lecture de la description détaillée ci-après, et à l'analyse des dessins annexés, sur lesquels :
**Fig. 1**

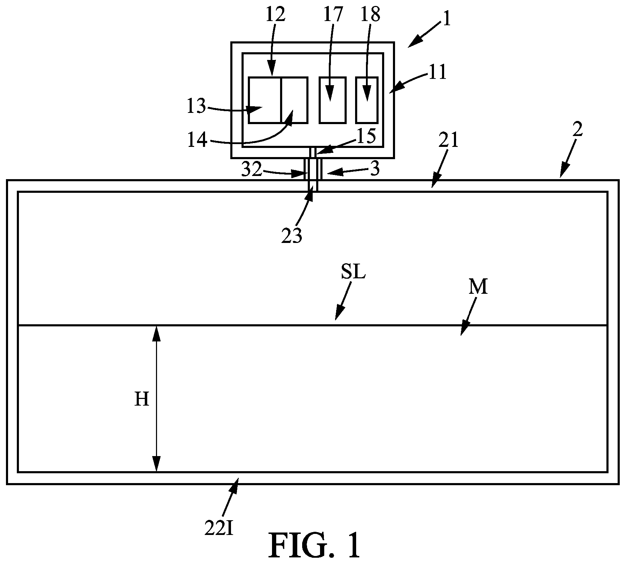

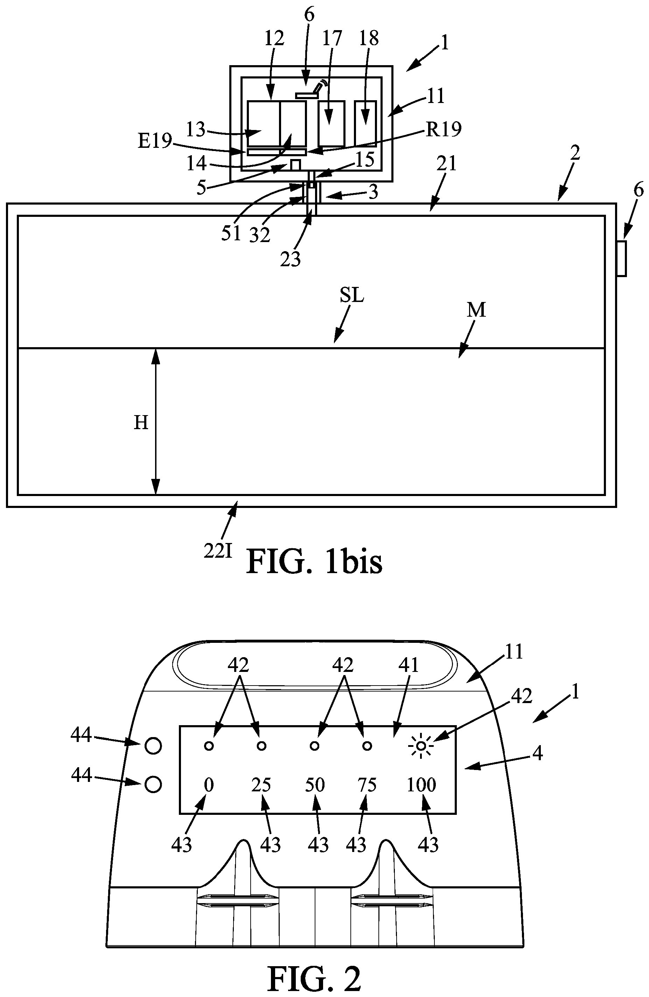

   [Fig. 1] montre une vue en coupe schématique d'un système comprenant un conteneur, un moyen de raccordement et un dispositif capteur selon un mode de réalisation conforme à l'invention.
**Fig. 1bis**
   [Fig. 1bis] montre une vue en coupe schématique d'un système comprenant un conteneur, un moyen de raccordement et un dispositif capteur selon un mode de réalisation conforme à l'invention.
**Fig. 2**
   [Fig. 2] montre une vue de face d'un dispositif selon un mode de réalisation conforme à l'invention, réalisé sous confidentialité par la société BLUEGRioT ^{©} pour le compte de la Demanderesse.
**Fig. 3**

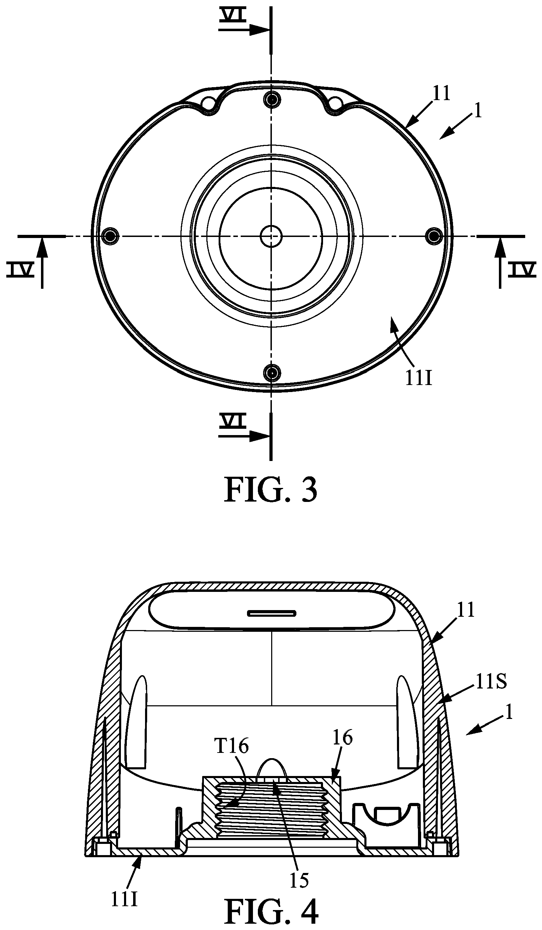

   [Fig. 3] montre une vue de dessous du dispositif capteur de la figure 2.
**Fig. 4**
   [Fig. 4] montre une vue en coupe selon la ligne IV-IV de la figure 3 du dispositif capteur de la figure 2.
**Fig. 5**

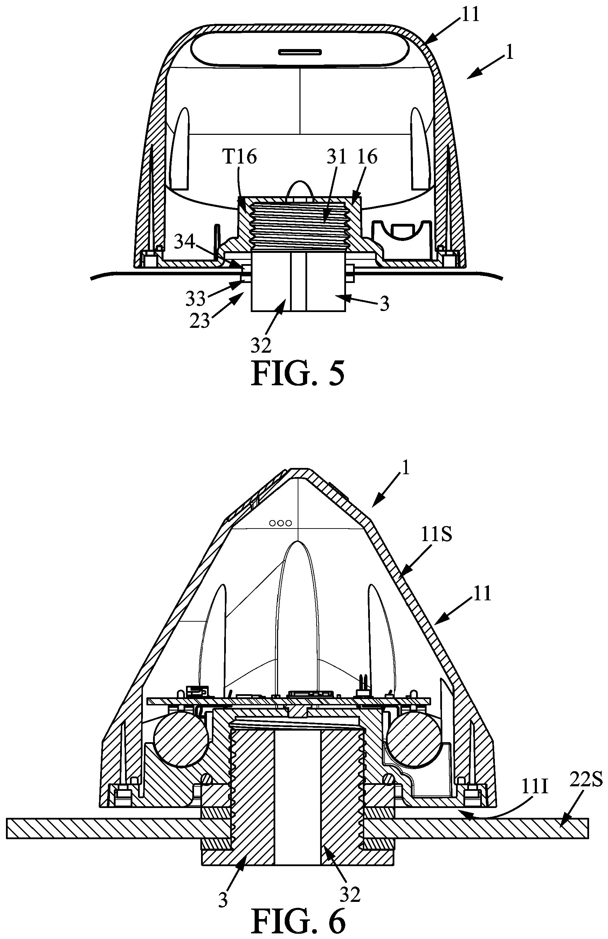

   [Fig. 5] montre une vue en coupe selon la ligne IV-IV de la figure 3 du dispositif capteur de la figure 2 fixé à une paroi de l'enveloppe d'un conteneur, représenté partiellement, via un moyen de raccordement, d'un système selon un mode de réalisation conforme à l'invention.
**Fig. 6**

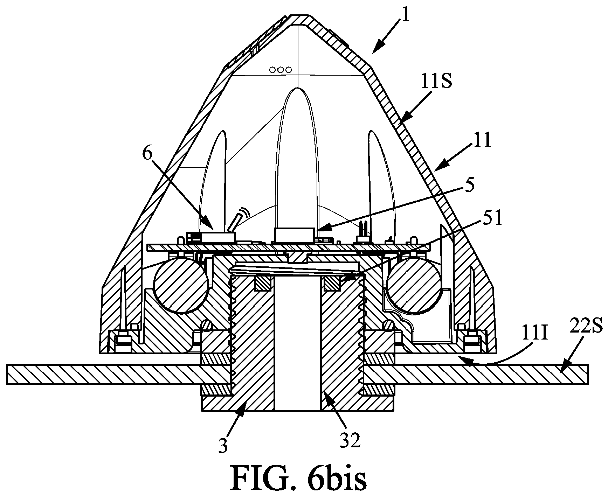

   [Fig. 6] montre une vue en coupe selon la ligne VI-VI de la figure 3 du dispositif capteur de la figure 2 fixé à un moyen de raccordement d'un ensemble selon un mode de réalisation conforme à l'invention.
**Fig. 6bis**
   [Fig. 6bis] montre une vue en coupe selon la ligne VI-VI de la figure 3 du dispositif capteur de la figure 2 fixé à un moyen de raccordement d'un ensemble selon un mode de réalisation conforme à l'invention.
**Fig. 7**

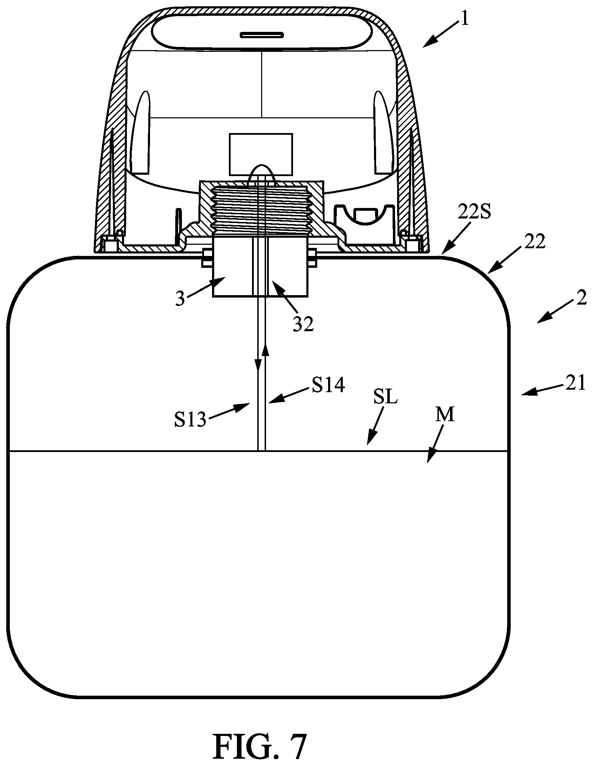

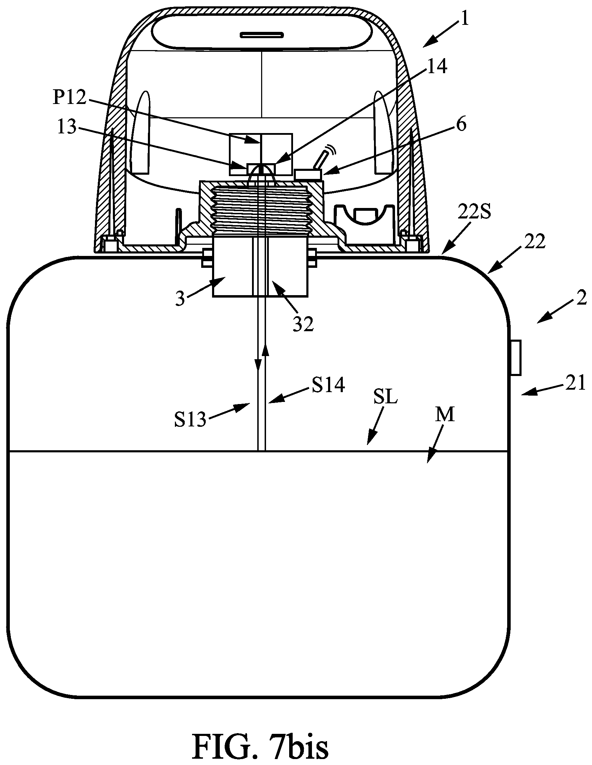

   [Fig. 7] montre une vue en coupe selon la ligne IV-IV de la figure 3 du dispositif capteur de la figure 2 fixé à une paroi de l'enveloppe d'un conteneur, représenté entièrement, via un moyen de raccordement, d'un système selon un mode de réalisation conforme à l'invention.
**Fig. 7bis**
   [Fig. 7bis] montre une vue en coupe selon la ligne IV-IV de la figure 3 du dispositif capteur de la figure 2 fixé à une paroi de l'enveloppe d'un conteneur, représenté entièrement, via un moyen de raccordement, d'un système selon un mode de réalisation conforme à l'invention.
**Fig. 8**

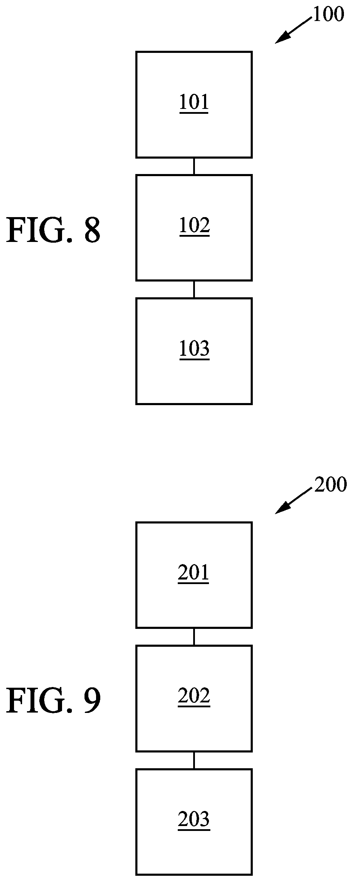

   [Fig. 8] montre une vue schématique d'un procédé de nettoyage de l'intérieur et/ou de l'extérieur de l'enveloppe d'un conteneur selon un mode de réalisation conforme à l'invention.
**Fig. 9**
   [Fig. 9] montre une vue schématique d'un procédé de suivi à distance d'informations relatives à un conteneur selon un mode de réalisation conforme à l'invention.
**Fig. 10**

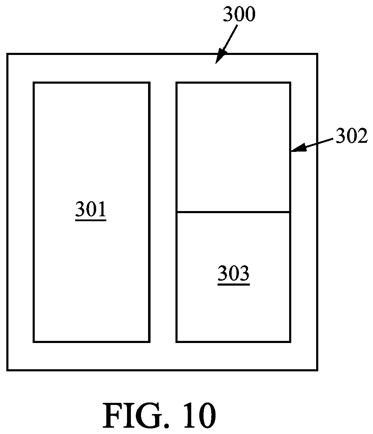

   [Fig. 10] est une vue schématique d'un circuit de traitement selon un mode de réalisation conforme à l'invention.
**Fig. 11**

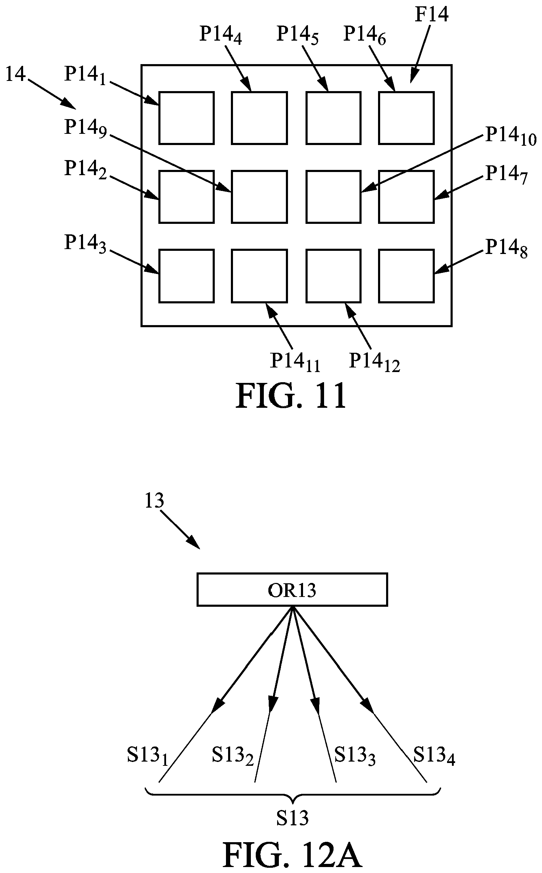

   [Fig. 11] est une vue schématique de dessous d'un récepteur d'un capteur de niveau d'un dispositif capteur selon l'invention.
**Fig. 12A**
   [Fig. 12A] est une vue schématique de face d'un émetteur d'un capteur de niveau d'un dispositif capteur selon l'invention.
**Fig. 12B**

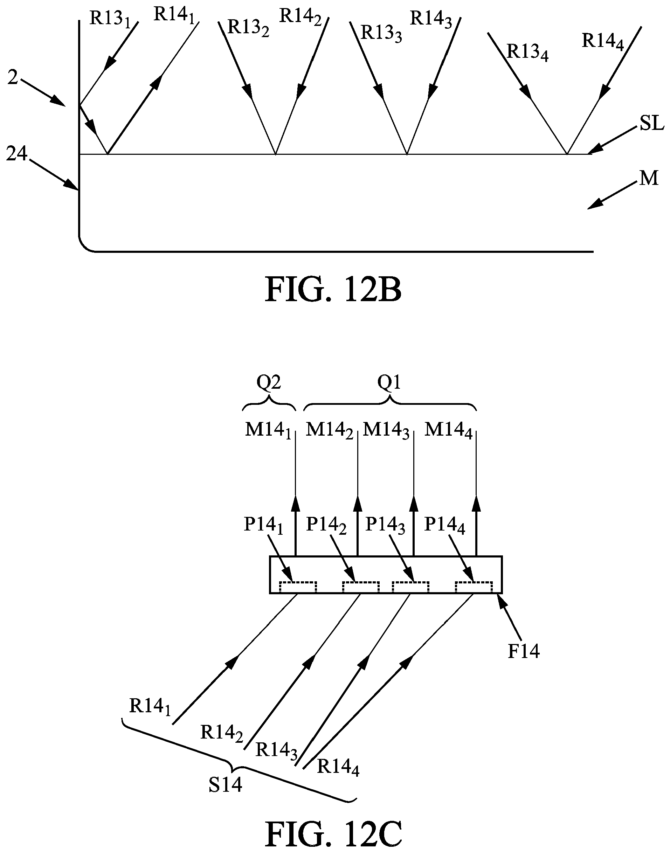

   [Fig. 12B] est une vue schématique de face en coupe de l'intérieur de l'enveloppe d'un conteneur à une paroi duquel est fixé un dispositif capteur selon l'invention.
**Fig. 12C**
   [Fig. 12C] est une vue schématique de face d'un récepteur d'un capteur de niveau d'un dispositif capteur selon l'invention.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Dans l'ensemble de la présente demande, supérieur/inférieur et latéral, en ce qui concerne la position de certains éléments du dispositif conteneur, du moyen de raccordement ou du conteneur s'entendent selon une direction sensiblement verticale de l'espace.

L'invention concerne un dispositif capteur 1 pour mesurer le niveau de matière M dans un conteneur 2, le conteneur comprenant une enveloppe 21 étanche configurée pour contenir de la matière M définissant une surface libre SL à l'intérieur de l'enveloppe 21.

Selon l'invention, le dispositif capteur 1 comprend :
- une coque 11,
- au moins un capteur de niveau 12, sans contact, comprenant un émetteur 13 configuré pour émettre un signal de détection S13, et un récepteur 14 configuré pour recevoir un signal de détection réfléchi S14, le signal de détection réfléchi S14 comprenant le signal de détection S13 après réflexion, ledit capteur de niveau 12 étant logé à l'intérieur de la coque 11.

Selon l'invention, la coque 11 comporte une fenêtre de mesure 15 autorisant le passage du signal de détection S13 émis par ledit émetteur 13 depuis l'intérieur de la coque 13 vers l'intérieur de l'enveloppe 21 du conteneur 2 et le passage du signal de détection réfléchi S14, après réflexion contre la surface libre SL de la matière M à l'intérieur de l'enveloppe 21 du conteneur 2, depuis l'intérieur de l'enveloppe 21 du conteneur 2 vers ledit récepteur 14 à l'intérieur de la coque 11.

Selon l'invention, le dispositif capteur 1 comprend en outre un moyen de fixation 16 solidaire de la coque 11, configuré de sorte à permettre la fixation amovible du dispositif capteur 1, à l'extérieur de l'enveloppe 21 du conteneur 2, sur un moyen de raccordement 3 solidaire d'une paroi 22 de l'enveloppe 21 du conteneur 2, avec la fenêtre de mesure 15 de la coque 11 positionnée en regard d'une ouverture 23 correspondante ménagée dans la paroi 22 de l'enveloppe 21 du conteneur 2.

Selon l'invention, le capteur de niveau 12 est configuré pour émettre un signal de mesure relatif au niveau de la matière M à l'intérieur de l'enveloppe 21 du conteneur 2 en fonction du signal de détection réfléchi S14 reçu par le récepteur 14.

On entend dans l'ensemble de la présente demande « niveau de matière M à l'intérieur de l'enveloppe 21 du conteneur 2 », comme visible sur l'exemple de réalisation de la figure 1, la hauteur H, selon une direction sensiblement verticale de l'espace, à laquelle se trouve la surface libre SL de la matière M à l'intérieur de l'enveloppe 21 du conteneur 2 par rapport à une paroi inférieure 221 de référence de l'enveloppe 21.

Également, comme visible plus particulièrement sur l'exemple de réalisation de la figure 7, afin de déterminer le niveau de matière M à l'intérieur de l'enveloppe 21 du conteneur 2, le signal de détection S13 émis par l'émetteur 13 est prévu pour être réfléchi par la surface SL de la matière M à l'intérieur de l'enveloppe 21 du conteneur 2, ou encore par une paroi inférieure 221 de l'enveloppe 21, lorsque celle-ci est vide, et former, au moins partiellement, le signal de détection réfléchi S14 reçu par le récepteur.

Ainsi, le dispositif capteur 1 selon l'invention peut facilement être installé sur divers type de conteneur 2, dont l'enveloppe 21 repose ou non sur un support, et notamment sur un conteneur 2 préexistant, ce qui permet de facilement et rapidement munir les conteneurs 2 d'un parc préexistant dudit dispositif de capteur 1, et contrairement au dispositif capteur commercialisé par la société Nanolike ^{©}, et décrit en partie dans le document WO 2018219683 A1.

L'installation du dispositif capteur 1 sur un conteneur 2 s'avère particulièrement simple et rapide, en ce qu'il suffit simplement de solidariser le moyen de fixation 16 au moyen de raccordement 3, sans devoir démonter préalablement l'un ou l'autre des éléments du conteneur 2.

Le dispositif capteur 1 selon l'invention peut donc être simplement et rapidement installé sur des conteneurs 2 présentant des géométries variées.

Également, le capteur de niveau 12 est un capteur sans contact et ne doit donc pas être placé à l'intérieur de l'enveloppe 21 du conteneur pour être en contact avec la matière M dont on souhaite mesurer le niveau.

De plus, comme visible plus particulièrement sur les exemples de réalisation des figures 1 et 7, le dispositif capteur 1 peut avantageusement être positionné sur une paroi supérieure 22S de l'enveloppe 21 du conteneur 2, et présenter ainsi un accès facilité pour réaliser son installation, mais également des opérations de maintenance sur ledit dispositif capteur 1, ou sur le conteneur 2, nécessitant la désolidarisation du dispositif capteur 1 de l'enveloppe 21 du conteneur 2.

Également, la surface libre SL de la matière M à l'intérieur de l'enveloppe 21 du conteneur 2 se trouve généralement en partie supérieure de celle-ci, en vis-à-vis de ladite paroi supérieure 22S de l'enveloppe 21. Le capteur de niveau 12 du dispositif capteur 1 se trouve donc au plus près de la surface libre SL de la matière M, ce qui facilite la mesure du niveau de matière M à l'intérieur de l'enveloppe 21 du conteneur 2.

Avantageusement, le moyen de fixation 16 solidaire de la coque 11 peut être prévu pour être fixé sur un moyen de raccordement 3 ménagé sur la paroi 22 de l'enveloppe 21 du conteneur non spécifiquement prévu à cet effet, tout comme ladite ouverture 23. Le moyen de raccordement 3 et l'ouverture 23 peuvent par exemple appartenir à un système d'équilibrage de la pression entre l'extérieur et l'intérieur de l'enveloppe 21 du conteneur 2.

Le dispositif capteur 1 peut alors rapidement et facilement être installé sur un conteneur 2 existant, et ne nécessite pas de modification structurelle particulière du conteneur 2.

A tout le moins, le perçage d'une ouverture 23 dans une paroi 22 de l'enveloppe 21 du conteneur 2 et l'installation d'un moyen de raccordement 3 solidaire de ladite paroi 22 de l'enveloppe 2 du conteneur 2 peuvent être réalisés facilement et rapidement sur différents types de conteneurs, et notamment des conteneurs 2 appartenant à un parc de conteneurs 2 préexistant.

Ladite fenêtre de mesure 15 peut avantageusement être ménagée sur une paroi inférieure 111 de la coque 11, notamment prévue pour se retrouver en vis-à-vis de la paroi supérieure 22S, comme visible sur les exemples de réalisation des figures 3 à 6.

Comme visible également sur les exemples de réalisation des figures 3 à 6, afin de faciliter l'accès à l'intérieur de la coque 11 et donc au capteur de niveau 12, par exemple pour effectuer une opération de maintenance sur ledit capteur 12, il peut être avantageusement prévu une coque 11 en deux ou plus parties, par exemple une partie supérieure 11S et une partie inférieure 111, avantageusement fixées entre elles par l'intermédiaire de moyens de fixation amovibles, comme par exemple des vis de fixation.

Comme visible sur les exemples de réalisation des figures 1, 4, 6 et 7, la fenêtre de mesure 15 peut consister en un perçage traversant ménagé dans une des parois de la coque 11 du dispositif conteneur 1, et notamment la partie inférieure 111 de la coque 11.

Avantageusement, et afin d'empêcher la pénétration d'éléments extérieurs au niveau de ladite fenêtre de mesure 15, comme par exemple la matière M contenue dans l'enveloppe 21 du conteneur 2, la fenêtre de mesure 15 peut également comprendre une paroi d'obturation, configurée pour fermer ladite fenêtre de mesure 15, par exemple au niveau d'une de ses extrémités. Ladite paroi d'obturation peut par exemple être réalisée dans un matériau transparent, afin de permettre le passage du signal de détection S13 et du signal de détection réfléchi S14.

Le capteur de niveau 12 et éventuellement les autres éléments électroniques du dispositif capteur 1 peuvent être alimentés en électricité par un moyen de stockage d'énergie comme par exemple une batterie, avantageusement logé à l'intérieur de ladite coque 11. L'emploi d'un moyen de stockage d'énergie permet d'éviter de devoir relier le dispositif capteur 1 au réseau électrique pour son fonctionnement.

Le moyen de stockage d'électricité peut avantageusement être prévu pour fournir une autonomie de fonctionnement au capteur de niveau 12 importante, notamment de plusieurs années, ce qui permet d'éviter de devoir recharger ou remplacer fréquemment ledit moyen de stockage d'électricité.

Le dispositif capteur 1 peut notamment être prévu pour être fixé sur un moyen de raccordement 3 présentant un perçage traversant 32 prévu pour être positionné en regard et dans le prolongement d'une ouverture 23 ménagée dans ladite paroi 22 de l'enveloppe 21 du conteneur 2, ledit perçage traversant 32 étant configuré pour être traversé par le signal de détection émis S13 par l'émetteur 13 et par le signal de détection réfléchi 14 destiné à être reçu par le récepteur 14.

Le dispositif capteur 1 peut alors être configuré pour être fixé de manière amovible sur le moyen de raccordement 3 par l'intermédiaire de son moyen de fixation 16 avec la fenêtre de mesure 15 de sa coque 11 en regard et dans le prolongement du perçage traversant 32 du moyen de raccordement 3 et de l'ouverture 23 ménagée dans la paroi 22 de l'enveloppe 21 du conteneur 2.

Selon un exemple particulier, le dispositif capteur 1 est prévu pour être fixé sur conteneur 2 dont l'enveloppe 21 présent une contenance supérieure à 300 litres.

Selon un mode de réalisation, le moyen de fixation 16 comprend un taraudage T16 entourant ladite fenêtre de mesure 15, le taraudage T16 étant configuré pour coopérer par vissage/dévissage avec un filetage 31 du moyen de raccordement 3, le filetage 31 étant configuré pour entourer l'ouverture 23 du conteneur 2.

Une telle fixation par vissage entre ledit moyen de fixation 16 et ledit moyen de raccordement 3 permet d'obtenir une fixation robuste, étanche et facilement et rapidement montable/démontable entre ledit dispositif capteur 1 et le moyen de raccordement 3, et donc le conteneur 2.

Cependant, et sans sortir du cadre de la présente invention, un autre système de fixation robuste, étanche et facilement et rapidement montable/démontable peut être prévu, comme par exemple un système à baïonnette, ou à glissière, etc.

Selon un mode de réalisation, ledit signal de détection S13 émis par l'émetteur 13 est un signal électromagnétique, optique ou ultrasonore.

Le capteur de niveau 12 peut par exemple être un capteur radar, lidar, infrarouge, laser, etc.

Selon un exemple particulier, un capteur de niveau 12 utilisant un signal de détection S13 optique donne des résultats satisfaisants en termes de précision de la mesure du niveau de la matière M dans l'enveloppe 21 du conteneur 2.

Également, un capteur de niveau 12 utilisant un signal de détection S13 optique nécessite peu d'énergie électrique pour fonctionner, ce qui s'avère avantageux pour le dispositif capteur 1 selon l'invention, qui est prévu pour fonctionner pendant une longue durée (plusieurs années) avec une alimentation électrique par l'intermédiaire d'un moyen de stockage d'électricité (non représenté), par exemple une batterie, qui ne peut généralement pas être rechargé ou remplacé pendant cette durée.

Selon un mode de réalisation, le dispositif capteur 1 comprend en outre un moyen de géolocalisation 17, configuré pour émettre un signal permettant de déterminer la position géographique du dispositif capteur 1.

Un tel moyen de géolocalisation 17 permet avantageusement de connaître la position géographique du dispositif capteur 1 et donc du conteneur 2, lorsque le capteur 1 est fixé audit conteneur 2, ce qui facilite les opérations de logistique dudit conteneur 2.

Le moyen de géolocalisation peut par exemple comprendre un traceur GPS.

Alternativement ou en complément, dans le cas où ledit dispositif capteur 1 est prévu pour transmettre des données via un réseau de télécommunication mobile, le moyen de géolocalisation 17 peut employer une méthode de géolocalisation utilisant ledit réseau de télécommunication mobile, et notamment par triangulation. Même si la précision de cette méthode de géolocalisation est moindre par rapport à la technologie GPS, celle-ci nécessite une faible consommation d'énergie, ce qui s'avère particulièrement avantageux pour le dispositif capteur 1 selon l'invention, qui est prévu pour fonctionner pendant une longue durée (plusieurs mois) avec une alimentation électrique par l'intermédiaire d'un moyen de stockage d'électricité, par exemple une batterie, qui ne peut généralement pas être rechargé ou remplacé pendant cette durée.

Avantageusement, comme visible sur l'exemple de réalisation de la figure 1, ledit moyen de géolocalisation 17 peut être logé à l'intérieur de la coque 11 du dispositif capteur 1, afin d'être isolé et protégé du milieu environnant.

Selon un mode de réalisation, ladite coque 11 comprend au moins un matériau thermoplastique, par exemple du polypropylène.

L'emploi d'un tel matériau thermoplastique permet d'avoir une coque 11 résistante aux chocs et de fabrication aisée. La coque 11, et notamment la partie supérieure 11S et la partie inférieure 111, quand celle-ci est réalisée en plusieurs parties, peut être facilement réalisée par moulage, notamment par moulage à injection.

Selon un mode de réalisation, le dispositif capteur 1 comprend une interface utilisateur 4 reliée audit capteur de niveau 12, l'interface utilisateur 4 comprenant un affichage 41 configuré de sorte à afficher une information relative au niveau de matière M à l'intérieur de l'enveloppe 21 du conteneur 2 dépendante du signal de mesure émis par ledit capteur de niveau 12.

Ainsi, en plus de la transmission d'une information relative au niveau de matière M à l'intérieur de l'enveloppe 21 du conteneur 2, par exemple à l'usine de production de ladite matière M, pour la surveillance du conteneur 2, il est possible d'afficher ladite information via ledit affichage 41 à un utilisateur se trouvant à proximité du dispositif capteur 1 et donc du conteneur 2, ce dernier pouvant être intéressé pour connaître le niveau de matière M dans le conteneur 2.

Afin de faciliter la lecture d'informations pour un utilisateur se trouvant à proximité du dispositif capteur 1, ladite interface 4, et notamment ledit affichage 41 peut être disposé, au moins en partie, sur la coque 11 dudit dispositif capteur 1.

Selon un mode de réalisation, et comme visible plus particulièrement sur l'exemple de réalisation de la figure 2, l'affichage 41 comprend une pluralité de diodes électroluminescentes (LED) 42 associées à une pluralité d'inscriptions 43.

Une telle conception de l'affichage 41 est particulièrement simple et consomme peu d'énergie, notamment en comparaison avec un écran.

Comme visible sur l'exemple de réalisation de la figure 2, l'affichage peut par exemple comprendre une pluralité de LEDs 42 associées à une pluralité d'inscriptions 43, de sorte que l'affichage 41 affiche une information relative à un pourcentage de matière M restant à l'intérieur de l'enveloppe 21 du conteneur 2, par exemple par rapport à la quantité initiale de matière M. En effet, il n'est généralement pas indispensable pour un utilisateur du conteneur 2 de connaître la quantité exacte de matière M à l'intérieur de l'enveloppe 21 du conteneur 2, celui-ci souhaitant généralement pouvoir estimer grossièrement la quantité de matière M, pour estimer le moment où il faut se réapprovisionner en matière M.

Les inscriptions 43 sont avantageusement positionnées en vis-à-vis de chacune des LEDs 42.

Par exemple, il peut être prévu cinq LEDs 42 associées respectivement avec l'inscription « 0 », « 25 », « 50 », « 75 » et « 100 », de sorte que l'affichage 41 soit apte à afficher le niveau de matière M dans l'enveloppe 21 du conteneur 2 correspondant à un pourcentage de matière M, avec un pas de 25%.

L'interface utilisateur 4 peut également comprendre, en complément éventuel, au moins un bouton d'actionnement 44, relié à l'affichage 41, le bouton d'actionnement 44 étant configuré pour déclencher une mesure de niveau de la matière M à l'intérieur de l'enveloppe 21 du conteneur 2 par le capteur de niveau 12 et l'affichage d'une information relative au niveau de matière M à l'intérieur de l'enveloppe 21 du conteneur 2 sur l'affichage 41.

Comme visible sur l'exemple de réalisation de la figure 2, le bouton d'actionnement 44 peut par exemple être un bouton poussoir.

Il peut également être prévu un deuxième bouton d'actionnement 44, configuré pour déclencher une autre action effectuée par l'affichage 41 ou par tout autre élément du dispositif capteur 1. Par exemple, l'actionnement du deuxième bouton d'actionnement 44 peut enclencher une phase de test de fonctionnement de l'affichage 41 ou du capteur de niveau 12, ou du moyen de géolocalisation 17 ou de tout autre élément électronique du dispositif capteur 1, au cours de laquelle le fonctionnement de l'élément électronique est testé et une information sur l'état de fonctionnement dudit élément est éventuellement affichée sur ledit affichage 41. Alternativement, ladite phase de test de fonctionnement peut également être déclenchée par ledit premier bouton d'actionnement 44.

Notamment, d'autres inscriptions 43, ne correspondant pas à une information sur le niveau de matière M à l'intérieur de l'enveloppe 21 du conteneur 2 peuvent être prévues associées à une ou plusieurs desdites LEDs 42 décrites ci-dessus, de sorte que selon le bouton d'actionnement 44 enclenché par un utilisateur, l'allumage d'une ou de plusieurs desdites LEDs 42 correspond à une informations sur le niveau de matière M à l'intérieur de l'enveloppe 21 du conteneur 2 à une information de nature différente.

Le dispositif capteur 1 peut être équipé de moyens électroniques de commande comprenant par exemple un circuit de traitement configuré pour commander le fonctionnement du dispositif capteur 1 selon l'invention, ledit circuit de traitement comportant notamment un processeur et une unité de mémoire, ladite unité de mémoire comprenant des instructions qui, lorsqu'elles sont exécutées par le processeur permettent de piloter le fonctionnement du dispositif capteur 1. Ces moyens électroniques peuvent être logés à l'intérieur de la coque 11 du dispositif capteur 1.

Selon un mode de réalisation, le dispositif capteur 1 comprend en outre un transmetteur de données, configuré de sorte à envoyer des données du capteur de niveau 12 vers un serveur distant, les données comprenant des données relatives au niveau de matière M à l'intérieur de l'enveloppe 21 du conteneur 2 établies à partir du signal de mesure émis par le capteur de niveau 12.

Il est ainsi possible de transmettre des informations sur la mesure de niveau de matière M à l'intérieur de l'enveloppe 21 du conteneur 2 à distance du conteneur 2, et notamment au lieu où est géré la logistique du conteneur 2, par exemple l'usine de production de la matière M, pour faciliter une telle logistique.

Le dispositif capteur 1 peut également comporter un récepteur de données, configuré de sorte à recevoir des données depuis un serveur distant et à les transmettre audit capteur de niveau 12.

Il est ainsi possible par exemple d'envoyer des requêtes à distance au capteur 12 pour déclencher une mesure du niveau de matière M à l'intérieur de l'enveloppe 21 du conteneur 2.

Le récepteur de données et/ou le transmetteur de données peut également être configuré pour émettre des données vers, respectivement recevoir des données depuis tout autre élément du dispositif capteur 1, et notamment le moyen de géolocalisation 17 ou le capteur de température 18 ou encore l'interface utilisateur 4, ou encore mettre à jour un logiciel de gestion interne du dispositif capteur 1.

Selon un mode de réalisation, le transmetteur de données est configuré pour transmettre des données avec un serveur distant via un réseau cellulaire bas-débit, sur une bande de fréquence comprise entre 800 MHz et 1000 MHz.

La transmission de données via un réseau unicellulaire bas-débit permet de transmettre des données sur une distance importante (plusieurs centaines de kilomètres) avec une faible consommation d'énergie par l'émetteur, avec la possibilité de transmettre des données de taille suffisante pour contenir l'information relative au niveau de matière M dans le conteneur 2.

Le réseau cellulaire bas-débit peut par exemple être le réseau SIGFOX ^{©}, qui est un réseau cellulaire bas-débit émettant sur la bande de fréquence 868-869 MHz. Le réseau SIGFOX ^{©} présente notamment l'avantage d'être déployé dans toute l'Europe, et bientôt dans le monde entier, ce qui permet la surveillance d'un conteneur 2 localisé sur une étendue géographique plus grande. Une alternative est par exemple le réseau LoRaWAN ^{©}, qui est implanté dans différents pays mais n'offre pas encore de possibilité d'interopérabilité entre les pays (connu sous le nom de « roaming » en langue Anglaise).

En alternative ou en complément, le dispositif capteur 1 peut être équipé d'un moyen utilisant la technologie de radio-identification, plus connue sous le nom de technologie RFID (« *Radio Frequency Identification »* en langue anglaise), et notamment la technologie RFID dual-mode, afin de permettre notamment l'identification du dispositif capteur 1, ou encore de permettre le transfert de données à la mémoire coopérant avec le processeur des moyens électroniques de commande du dispositif capteur 1.

Selon un mode de réalisation, le dispositif capteur 1 comprend en outre un capteur de température 18, configuré de sorte à mesurer la température environnante du dispositif capteur 1 et à émettre un signal de mesure relatif à la température environnante du dispositif de capteur 1.

En effet, et selon les constatations de l'inventeur, afin d'assurer la surveillance du conteneur 2, il peut être avantageux de connaître la température, notamment à l'intérieur de son enveloppe 21. Cependant, afin d'éviter tout contact entre un capteur de température et la matière M à l'intérieur de l'enveloppe 21 du conteneur, qui pourrait être préjudiciable pour ladite matière M, il s'avère particulièrement avantageux de déterminer simplement la température environnante du dispositif capteur 1, et donc du conteneur 2, à l'extérieur de la coque 11 et donc de l'enveloppe 21 du conteneur 2, et éventuellement d'en déduire la température à l'intérieur de l'enveloppe 21 du conteneur 2.

Avantageusement, ledit capteur de température 18 peut être logé à l'intérieur de la coque 11 pour minimiser l'encombrement du dispositif capteur 1.

Selon un mode de réalisation, le dispositif capteur 1 comprend en outre un moyen de mesure du champ magnétique 5 configuré pour émettre un signal de mesure relatif au champ magnétique à proximité dudit moyen de mesure du champ magnétique 5, ledit moyen de mesure du champ magnétique 5 étant avantageusement solidaire de la coque 11, et notamment positionné au niveau du moyen de fixation 16.

Comme visible sur les exemples de réalisation des figures 1bis et 6bis, ledit moyen de mesure du champ magnétique 5 peut avantageusement comporter un capteur à effet Hall ou encore un interrupteur magnétique à lame souple, également connu sous le nom d'interrupteur « *Reed* », avantageusement orienté vers le bas du dispositif capteur 1, et notamment en direction de la fenêtre de mesure 15.

Ledit moyen de mesure du champ magnétique 5 peut avantageusement être relié auxdits moyens électroniques de commande et/ou au transmetteur de données et/ou au récepteur de données, tels que décrits ci-dessus.

Un tel moyen de mesure du champ magnétique 5 peut avantageusement être prévu pour mesurer le champ magnétique émis par des éléments se trouvant à proximité du dispositif capteur 1, et notamment par un élément de détection 51 réalisé, au moins partiellement, en matériau magnétique, solidaire d'un moyen de raccordement 3, tel que décrit ci-après, ou encore de l'enveloppe 21 du conteneur 2, et notamment de la paroi 22 de l'enveloppe 21, de sorte à permettre la détection de la fixation du dispositif capteur 1 à l'enveloppe 21, et notamment via ledit moyen de raccordement 3.

En effet, ledit élément de détection 51 étant réalisé, au moins partiellement, en matériau magnétique, la valeur du champ magnétique mesuré par ledit moyen de mesure du champ magnétique 5 lorsque ledit élément de détection 51 se trouve à proximité augmente sensiblement. Notamment, il peut être avantageusement déterminé une valeur seuil, telles que si la valeur du champ magnétique mesuré par ledit moyen de mesure du champ magnétique 5 dépasse une première valeur seuil, il peut être conclu que le dispositif capteur 1 est fixé de manière correcte, i.e. à la position souhaitée, sur l'enveloppe 21, notamment via ledit moyen de raccordement 3. Également, afin de diminuer la consommation d'énergie, notamment électrique, dudit dispositif capteur 1, le dispositif capteur 1 peut être configuré de sorte à se mettre en veille s'il n'est pas détecté, via ledit moyen de mesure du champ magnétique 5, que le dispositif capteur 1 est fixé de manière correcte sur l'enveloppe 21 du conteneur 2 et à sortir de sa veille s'il est détecté, via ledit moyen de mesure du champ magnétique 5, que le dispositif capteur 1 est fixé de manière correcte sur l'enveloppe 21 du conteneur 2.

Selon un mode de réalisation, comme visible sur l'exemple de réalisation des figures 1bis, 6bis et 7bis, ledit dispositif capteur 1 comprend un transpondeur RFID (« *Radio Frequency Identification »* en langue anglaise) 6 comprenant une mémoire avec des données relatives au dispositif capteur 1.

Ledit transpondeur RFID 6 peut avantageusement être configuré pour émettre et recevoir des ondes radio en Ultra Hautes Fréquences. Les ondes radio en Ultra Hautes Fréquences sont généralement comprises entre 860 et 960 MHz.

Les données relatives au dispositif capteur 1 peuvent notamment comprendre des données permettant l'identification du dispositif capteur 1, comme par exemple une référence unique d'identification.

Ainsi, comme expliqué ci-dessus, un tel transpondeur RFID 6 peut être prévu pour permettre d'effectuer l'identification du dispositif capteur 1, en coopérant avec un lecteur RFID, configuré pour lire des données d'identification du dispositif capteur 1 stockées dans la mémoire du transpondeur RFID 6. Un tel lecteur peut par exemple être installé sur un site, dans lequel des conteneurs 2 sont remplis de matière M instable, et dans lequel un dispositif capteur 1 est fixé sur lesdits conteneurs 2 après leur remplissage de matière M instable.

Avantageusement, ledit transpondeur RFID 6 peut être relié, et notamment par au moins une liaison filaire, auxdits moyens électroniques de commande et/ou au transmetteur de données et/ou au récepteur de données, tels que décrits ci-dessus, de sorte à permettre la lecture et/ou l'écriture de données dans la mémoire dudit transpondeur RFID 6 par lesdits moyens électroniques de commande ou par l'intermédiaire du transmetteur de données et/ou du récepteur de données.

Selon un mode de réalisation, comme visible sur l'exemple de réalisation des figures 1bis et 7bis :
- l'émetteur 13 est configuré pour émettre un signal de détection S13 optique, et notamment lumineux, en particulier infrarouge, et de préférence laser,
- le récepteur 14 est configuré pour recevoir un signal de détection réfléchi S14 optique, et notamment lumineux, en particulier infrarouge, et de préférence laser,
- au moins une lentille E19, R19 est intercalée entre l'émetteur 13, respectivement le récepteur 14, et la fenêtre de mesure 15.

En effet, et selon les constatations de l'inventeur, et malgré les préjugés de l'art antérieur concernant l'emploi de moyens de détection optique pour la mesure de niveau d'une surface d'un liquide, et notamment concernant l'imprécision et/ou le risque d'erreurs des mesures de niveau d'une surface d'un liquide par l'intermédiaire d'un signal optique, et notamment lumineux, à cause de la réflexion et de la diffraction de rayons lumineux pénétrant ou se réfléchissant au passage dans un milieu liquide, il s'avère que l'emploi d'un émetteur 13 configuré pour émettre un signal de détection S13 optique, en particulier infrarouge, et notamment laser, de même qu'un récepteur 14 configuré pour recevoir un signal de détection réfléchi S14 optique, en particulier infrarouge, et notamment laser, en combinaison avec la au moins une lentille E19, R19 intercalée entre l'émetteur 13, respectivement le récepteur 14, et la fenêtre de mesure 15 permet d'obtenir un signal de mesure relatif au niveau de matière M à l'intérieur de l'enveloppe 21 du conteneur 2 particulièrement fiable et précis.

Le niveau de la surface libre SL de la matière M à l'intérieur de l'enveloppe 21 d'un conteneur 2 peut ainsi être déterminé en fonction de la vitesse de déplacement de la lumière et du temps écoulé entre l'émission d'un signal de détection S13 émis par l'émetteur 13 et la réception par ledit récepteur 14 du signal de détection réfléchi S14, formé par ledit signal de détection S13 après réflexion contre la surface libre SL de la matière M à l'intérieur de l'enveloppe 21 du conteneur 2.

Également, la au moins une lentille E19, R19 intercalée entre l'émetteur 13, respectivement le récepteur 14, et la fenêtre de mesure 15, permet respectivement d'orienter les signaux de détection S13 émis par le récepteur 13 vers la surface libre SL de la matière M à l'intérieur de l'enveloppe 21 d'un conteneur 2, respectivement d'orienter le signal de détection S14 réfléchi vers le récepteur 14 à l'intérieur de la coque 11. Cela permet avantageusement de s'affranchir d'une étape fastidieuse de calibration du capteur de niveau 12 lors de sa fixation sur un conteneur 2 pour s'assurer de l'orientation adéquate du récepteur 14, et de l'émetteur 13, par rapport à l'enveloppe 21 du conteneur 2 de sorte qu'un signal de détection S13 émis par l'émetteur 13 atteigne la surface libre SL de la matière M à l'intérieur de l'enveloppe 21 du conteneur 2, et/ou à un signal de détection réfléchi S14 d'atteindre le récepteur 14.

Avantageusement, l'émetteur 13 et/ou le récepteur 14 et/ou la au moins une lentille E19 intercalée entre l'émetteur 13 et la fenêtre de mesure 15 et/ou la au moins une lentille R19 intercalée entre le récepteur 14 et la fenêtre de mesure 15 peuvent être intégrées sur un même composant électronique, par exemple le capteur référencé VL53L1X commercialisé par la société STMICROELECTRONICS ^{®}.

Selon un mode de réalisation, et comme visible plus particulièrement sur l'exemple de réalisation de la figure 7bis, une paroi de séparation optique P12 sépare l'émetteur 13 du récepteur 14, ladite paroi de séparation optique P12 étant configuré de sorte à empêcher un signal de détection S13 optique émis par ledit récepteur 13 d'atteindre ledit récepteur 14 sans avoir traversé ladite fenêtre de mesure 15 de sorte à sortir de la coque 11.

Cette disposition avantageuse de l'invention permet avantageusement de s'affranchir des erreurs de mesures qui pourraient être dues à un encrassement de la fenêtre de mesure 15, et notamment de sa paroi d'obturation telle que décrite ci-dessus. En effet, et en cas d'encrassement, au moins partiel, de la fenêtre de mesure 15, et notamment de sa paroi d'obturation, diminuant, au moins partiellement, sa transparence, un signal de détection S13 optique émis par ledit émetteur 13 risque d'être réfléchi par ladite partie encrassée de fenêtre de mesure 15 et d'atteindre directement le récepteur 14, sans avoir atteint la surface libre SL de la matière M stockée dans l'enveloppe 21 d'un conteneur 2, et donc engendrer une mesure erronée du niveau de matière M dans l'enveloppe 21 du conteneur 2.

Au contraire, la paroi de séparation optique P12 empêche un signal de détection S13 émis par ledit émetteur 13 d'atteindre le récepteur 14 sans avoir traversé la fenêtre de mesure 15, et donc d'avoir été réfléchi par la surface libre SL de la matière M dans l'enveloppe 21 du conteneur 2, et empêche donc les erreurs de mesure qui pourraient en découler.

Avantageusement, l'émetteur 13, le récepteur 14, et la paroi de séparation optique P12 peuvent être intégrées sur un même composant électronique, par exemple le capteur référencé VL53L1X commercialisé par la société STMICROELECTRONICS ^{®}.

Selon l'invention:
- l'émetteur 13 est configuré de sorte à émettre un signal de détection S13 comportant une pluralité de rayons lumineux d'émission R13₁ ... R13ₙ, ayant avantageusement une origine OR13 commune au niveau de l'émetteur 13, comme visible sur l'exemple de réalisation de la figure 12A, au moins deux rayons lumineux d'émission R13₁ ... R13ₙ présentant chacun une orientation différente par rapport audit émetteur 13, et notamment de sorte que l'ensemble des rayons lumineux R13₁... R13ₙ forment sensiblement un cône d'origine O13, et de sorte que le signal de détection réfléchi S14 reçu par le récepteur 14 comporte une pluralité de rayons lumineux de détection réfléchis R14₁ ... R14ₙ, avec avantageusement au moins deux rayons lumineux de détection réfléchis R14₁ ... R14ₙ présentant chacun une orientation différente par rapport audit récepteur 14, comme visible sur l'exemple de réalisation de la figure 12C, chacun formé par un rayon lumineux d'émission R13₁... R13ₙ du signal de détection S13 émis par l'émetteur 13 après au moins une réflexion contre une paroi 22, 24 de l'enveloppe 21 du conteneur 2 et/ou contre la surface libre SL de la matière M à l'intérieur de l'enveloppe 21 du conteneur 2, comme visible sur l'exemple de réalisation de la figure 12B,
- le récepteur 14 comporte une pluralité d'unités de réception P14₁ ... P14ₙ réparties de manière régulière sur une surface sensiblement plane F14 orientée vers la fenêtre de mesure 15, et configuré de sorte à recevoir uniquement un seul rayon de détection réfléchi R14₁ ... R14ₙ du signal de détection réfléchi S14, le récepteur 14 étant configurée de sorte à émettre autant de signaux de mesure M14₁ ... M14ₙ que d'unités de réception P14₁ ... P14ₙ, éventuellement distincts, chacun déterminé en fonction du rayon de détection réfléchi R14₁ ... R14ₙ unique reçu au niveau de chaque unité de réception P14₁ ... P14ₙ, comme visible sur les exemples de réalisation des figures 11 et 12C,
- le signal de mesure émis par ledit capteur de niveau 12 relatif au niveau de la matière M à l'intérieur de l'enveloppe 21 du conteneur 2 étant déterminé en fonction des différentes signaux de mesure M14₁ ... M14ₙ émis par le récepteur 14 déterminés à partir des différentes unités de réception P14₁ ... P14ₙ.

Chaque unité de réception P14₁ ... P14ₙ peut par exemple être une diode à avalanche à photon unique (« *Single Photon Avalanche Diode* » en langue anglaise, connu également sous l'acronyme SPAD).

On entend par répartis régulièrement, que les différentes unités de réception P14₁... P14ₙ forment sur ladite surface plane F14 une forme géométrique régulière, comme par exemple un rectangle, comme visible sur l'exemple de réalisation de la figure 11, ou un cercle, et que deux unités de réception P14₁... P14ₙ consécutives sont écartées d'une même distance.

Avantageusement, un tel émetteur 13 et un tel récepteur 14 peuvent être intégrées sur un même composant électronique, et notamment le capteur référencé VL53L1X commercialisé par la société STMICROELECTRONICS ^{®}.

Cette disposition avantageuse de l'invention permet de s'affranchir d'une étape fastidieuse de calibration du capteur de niveau 12 lors de sa fixation sur un conteneur 2 pour s'assurer de l'orientation adéquate du récepteur 14, et de l'émetteur 13, par rapport à l'enveloppe 21 du conteneur 2 de sorte qu'un signal de détection S13 émis par l'émetteur 13 atteigne la surface libre SL de la matière M à l'intérieur de l'enveloppe 21 du conteneur 2, et/ou qu'un signal de détection réfléchi S14 atteigne le récepteur 14.

En effet, selon les constatations de l'inventeur, et notamment lorsque le niveau de matière M à l'intérieur de l'enveloppe 21 du conteneur 2 est faible, i.e. par exemple inférieur à 50 cm, il se peut qu'un signal de détection S13 émis par l'émetteur 13 atteigne, au moins en partie, une paroi 24, et notamment une paroi latérale 24, de l'enveloppe 21 et soit réfléchi par cette dite paroi 24 avant d'atteindre la surface libre SL de la matière M et d'être réfléchie par celle-ci pour former, au moins en partie, le signal de détection réfléchi S14 reçu par ledit récepteur 14, ce qui va augmenter le temps écoulé entre l'émission d'au moins une partie du signal de détection S13 émis par l'émetteur 13 et la réception d'au moins une partie du signal de détection réfléchi S14 reçu par le récepteur 14 et donc fausser la mesure du niveau de la matière M à l'intérieur de l'enveloppe 21 du conteneur 2.

Au contraire, selon les constations de l'inventeur, avec l'émetteur 13 et le récepteur 14 selon un tel mode de réalisation de l'invention, parmi la pluralité de rayons lumineux d'émission R13₁ ... R13ₙ du signal d'émission S13, et notamment ceux ayant chacun une orientation différente par rapport audit émetteur 13, il peut y en avoir une première quantité Q1 qui sont réfléchis uniquement par la surface libre SL de la matière M à l'intérieur de l'enveloppe 21 du conteneur 2 et former chacun un rayon lumineux de détection réfléchi R14₁ ... R14ₙ du signal de détection S14 atteignant chacun une unité de détection P14₁ ... P14ₙ.

Parmi la pluralité de rayons lumineux d'émission R13₁ ... R13ₙ du signal d'émission S13, et notamment ceux ayant chacun une orientation différente par rapport audit émetteur 13, il peut également y en avoir une deuxième quantité Q2, éventuellement strictement inférieure à la première quantité Q1, qui sont réfléchis par la paroi 24 de l'enveloppe 21 avant ou après être réfléchis par la surface libre SL de la matière M à l'intérieur de l'enveloppe 21 du conteneur 2 et former chacun un rayon lumineux de détection réfléchi R14₁ ... R14ₙ du signal de détection S14 atteignant une unité de détection P14₁ ... P14ₙ.

Parmi la pluralité de rayons lumineux d'émission R13₁ ... R13ₙ du signal d'émission S13, et notamment ceux ayant chacun une orientation différente par rapport audit émetteur 13, il peut également y en avoir une troisième quantité Q3 qui ne forment pas un rayon lumineux de détection réfléchi R14₁ ... R14ₙ du signal de détection S14, car ils n'atteignent pas une unité de détection P14₁ ... P14ₙ.

Dès lors, les signaux de mesure M14₁ ... M14ₙ déterminés à partir d'une première quantité Q1 des unités de détection P14₁ ... P14ₙ en fonction des rayons lumineux de détection réfléchis R14₁ ... R14ₙ du signal de détection S14 issus de la première quantité Q1 de rayons lumineux d'émission R13₁ ... R13ₙ du signal d'émission S13 reçus par elles peuvent être sensiblement identiques, car correspondant à des temps de trajet de la lumière entre l'émetteur 13 et le récepteur 14 sensiblement identique.

Au contraire, le reste des unités de détection P14₁ ... P14ₙ peuvent soit ne pas être atteintes par un rayon de détection réfléchi R14₁ ... R14ₙ du signal de détection S14, soit être atteintes, pour une quantité Q2 d'unités de détection P14₁ ... P14ₙ, par un rayon de détection réfléchi R14₁ ... R14ₙ, du signal de détection S14 de la deuxième quantité Q2 de rayons d'émission R13₁ ... R13ₙ du signal d'émission S13. Les signaux de mesure M14₁ ... M14ₙ déterminés à partir de ces unités de détection P14₁ ... P14ₙ sont sensiblement différents des signaux de mesure M14₁ ... M14ₙ déterminés à partir de la première quantité Q1 des unités de détection P14₁ ... P14ₙ, et notamment correspondre à une valeur aberrante du niveau de matière M à l'intérieur de l'enveloppe 21 du conteneur 2, par exemple supérieur à la hauteur maximale, sensiblement selon la Verticale, de l'enveloppe 21.

Ainsi, par exemple, seuls les signaux de mesure M14₁ ... M14ₙ déterminés à partir de la première quantité Q1 des unités de détection P14₁ ... P14ₙ peuvent être pris en compte pour la détermination du signal de mesure émis par ledit capteur de niveau 12 relatif au niveau de la matière M à l'intérieur de l'enveloppe 21 du conteneur 2, les autres signaux de mesure M14₁ ... M14ₙ.

Notamment, selon un mode de réalisation, le signal de mesure émis par le capteur de niveau 12 relatif au niveau de la matière M à l'intérieur de l'enveloppe 21 du conteneur 2 est déterminé en :
/a/ considérant une première quantité Q1 de signaux de mesure M14₁ ... M14ₙ émis par le récepteur 14 déterminés à partir d'une première quantité Q1 d'unités de réception P14₁ ... P14ₙ, telle que lesdits signaux de mesure M14₁ ... M14ₙ de ladite première quantité Q1 correspondent chacun à un temps de parcours d'un rayon lumineux d'émission R13₁ ... R13ₙ réfléchi uniquement par la surface libre SL de la matière M dans l'enveloppe 21 du conteneur 2 avant de former un rayon lumineux de détection réfléchi R14₁ ... R14ₙ, chacun desdits signaux de mesure M14₁ ... M14ₙ de la première quantité Q1 étant avantageusement sensiblement identique,
/b/ considérant une deuxième quantité Q2 de signaux de mesure M14₁ ... M14ₙ émis par le récepteur 14 déterminés à partir d'une deuxième quantité Q2 d'unités de réception P14₁ ... P14ₙ, telle que lesdits signaux de mesure M14₁ ... M14ₙ de ladite deuxième quantité Q2 correspondent chacun à un temps de parcours d'un rayon lumineux d'émission R13₁ ... R13ₙ réfléchi par au moins une paroi 24, et notamment une paroi latérale 24, de l'enveloppe 21 et par la surface libre SL de la matière M dans l'enveloppe 21 du conteneur 2, avant et/ou après avoir été réfléchi par ladite paroi 24 de l'enveloppe 21, avant de former un rayon lumineux de détection réfléchi R14₁ ... R14ₙ, et strictement supérieur au temps de parcours correspondant aux signaux de mesure M14₁ ... M14ₙ de la première quantité Q1, chacun desdits signaux de mesure M14₁ ... M14ₙ de la deuxième quantité Q2 étant avantageusement différent des signaux de mesure M14₁ ... M14ₙ de la première quantité Q1, et pouvant notamment correspondre chacun à des valeurs aberrantes du temps de parcours possible d'un rayon lumineux d'émission R13₁ ... R13ₙ ayant été réfléchi uniquement par la surface libre SL de la matière M dans l'enveloppe 21 du conteneur 2 avant de former un rayon lumineux de détection réfléchi R14₁ ... R14ₙ,
/c/ discriminant les signaux de mesure M14₁ ... M14ₙ de la deuxième quantité Q2 de signaux de mesure M14₁ ... M14ₙ et en ne tenant compte que des signaux de mesure M14₁ ... M14ₙ de la première quantité Q1 de signaux de mesure M14₁ ... M14ₙ pour déterminer le signal de mesure émis par le capteur de niveau 12, par exemple en effectuant une moyenne des signaux de mesure M14₁ ... M14ₙ de la première quantité Q1.

Ainsi, le dispositif capteur 12 est en mesure de déterminer de manière autonome, automatiquement, et sans étape de calibration fastidieuse, les signaux de mesure M14₁ ... M14ₙ qui sont pertinents pour déterminer le signal de mesure émis par le capteur de niveau 12 relatif au niveau de la matière M à l'intérieur de l'enveloppe 21 du conteneur 2, et d'écarter ceux qui fausseraient la détermination de ce signal de mesure émis par ledit capteur de niveau 12.

En effet, le dispositif capteur 1 étant fixé à l'enveloppe 21 d'un conteneur 2 via le moyen de raccordement 3, dans une position qui n'est pas constante, et notamment en rotation selon l'axe du taraudage T16 des moyens de fixation 16 ou du filetage 31, les unités de réception P14₁ ... P14ₙ du récepteur 14 n'ont pas une position fixée par rapport à l'enveloppe 21 du conteneur 2, et notamment par rapport à ladite paroi latérale 24. Il est donc particulièrement avantageux de pouvoir déterminer de manière autonome et automatique lesquelles reçoivent un rayon lumineux de détection réfléchi R14₁ ... R14ₙ pertinent pour la détermination du signal de mesure émis par le capteur de niveau 12 relatif au niveau de la matière M à l'intérieur de l'enveloppe 21 du conteneur 2, i.e. ceux issus d'un rayon lumineux d'émission R13₁ ... R13ₙ réfléchi uniquement par la surface libre SL de la matière M à l'intérieur de l'enveloppe 21 du conteneur 2, et lesquelles reçoivent un rayon lumineux de détection réfléchi R14₁ ... R14ₙ non-pertinent pour la détermination du signal de mesure émis par le capteur de niveau 12 relatif au niveau de la matière M à l'intérieur de l'enveloppe 21 du conteneur 2, i.e. ceux issus d'un rayon lumineux d'émission R13₁ ... R13ₙ réfléchi par une paroi 24, et notamment une paroi latérale 24 de l'enveloppe 21 du conteneur 2 puis par la surface libre SL de la matière M à l'intérieur de l'enveloppe 21 du conteneur 2.

L'invention concerne également un ensemble comprenant :
- un dispositif capteur 1 selon l'un des modes de réalisation décrit précédemment,
- un moyen de raccordement 3, apte à être solidarisé à une paroi 22 de l'enveloppe 21 d'un conteneur 2.

Selon l'invention, le moyen de raccordement 3 présente un perçage traversant 32 prévu pour être positionné en regard et dans le prolongement d'une ouverture 23 ménagée dans ladite paroi 22 de l'enveloppe 21 du conteneur 2.

Selon l'invention, le dispositif capteur 1 est configuré pour être fixé de manière amovible sur le moyen de raccordement 3 par l'intermédiaire de son moyen de fixation 16 avec la fenêtre de mesure 15 de sa coque 11 en regard et dans le prolongement du perçage traversant 32 du moyen de raccordement 3 et de l'ouverture 23 ménagée dans la paroi 22 de l'enveloppe 21 du conteneur 2, ledit perçage traversant 32 étant configuré pour être traversé par le signal de détection émis S13 par l'émetteur 13 et par le signal de détection réfléchi 14 destiné à être reçu par le récepteur 14.

L'ensemble des dispositions et des avantages décrits précédemment concernant le dispositif capteur 1 et le moyen de raccordement 3 s'appliquent à l'ensemble selon l'invention.

Selon un mode de réalisation :
- le moyen de fixation 16 du dispositif capteur 1 comprend un taraudage T16 entourant la fenêtre de mesure 15 de la coque 11 du dispositif capteur 1 et
- le moyen de raccordement 3 comporte un filetage 31 entourant ledit perçage traversant 32, le filetage 31 étant configuré pour entourer l'ouverture ménagée dans la paroi 22 de l'enveloppe 21 du conteneur 22, le filetage 31 étant configuré pour coopérer avec ledit taraudage T16 du moyen de fixation 16 pour assurer la fixation amovible du dispositif capteur 1 sur ledit moyen de raccordement 3 par vissage/dévissage.

Selon un mode de réalisation, le moyen de raccordement 3 peut être fixé de manière non-démontable à ladite paroi 22 de l'enveloppe 21 du conteneur 2, ou encore être ménagé, au moins en partie, d'un seul tenant et venu de matière avec ladite paroi 22 de l'enveloppe 21 du conteneur 2, et notamment dans le cas où le moyen de raccordement 3 est réalisé dans le même matériau que ladite paroi 22 de l'enveloppe 21 du conteneur 2, par exemple en matériau thermoplastique.

Selon un mode de réalisation alternatif, le moyen de raccordement 3 peut être fixé de manière amovible à ladite paroi 22 de l'enveloppe 21 du conteneur 2, notamment afin de faciliter les opérations de maintenance sur ledit moyen de raccordement 3 ou sur ledit conteneur 2 nécessitant le démontage du moyen de raccordement 3 de la paroi 22 de l'enveloppe 21 du conteneur.

Notamment, et comme visible plus particulièrement sur l'exemple de réalisation des figures 5 à 7, le moyen de raccordement 3 peut comporter une première paroi d'arrêt 33 et une deuxième paroi d'arrêt 34 positionnée en face et sensiblement parallèle à la première paroi d'arrêt 33, et mobile en translation par rapport à la première paroi d'arrêt 33, la première paroi d'arrêt 33 et la deuxième paroi d'arrêt 34 étant configurées pour venir enserrer la paroi 22 de l'enveloppe 21 du conteneur 2 afin d'assurer la fixation du moyen de raccordement 3 à l'enveloppe 21 du conteneur 2.

Avantageusement, et afin d'assurer l'étanchéité entre le moyen de raccordement 3 et la paroi 22 de l'enveloppe 21 du conteneur 2, un moyen d'étanchéité (non représenté), comme par exemple un joint d'étanchéité torique, peut être intercalé entre ladite première paroi d'arrêt 33 et la paroi 22 de l'enveloppe 21 du conteneur 2 et/ou entre ladite deuxième paroi d'arrêt 34 et la paroi 22 de l'enveloppe 21 du conteneur 2.

La première paroi d'arrêt 33 et/ou la deuxième paroi d'arrêt 34 peut être prévue pour se déplacer en translation par rapport au moyen de raccordement 3 par vissage/dévissage, de sorte à assurer le déplacement en translation de la deuxième paroi d'arrêt 34 par rapport à la première paroi d'arrêt 33, ce qui permet également d'assurer le verrouillage de la position de la deuxième paroi d'arrêt 34 par rapport à la première paroi d'arrêt 33. La fixation du moyen de raccordement sur la paroi 22 de l'enveloppe 21 du conteneur 2 se fait ainsi à la manière d'un presse-étoupe.

Alternativement ou en complément, un moyen de verrouillage de la position de la deuxième paroi d'arrêt 34 par rapport à la première paroi d'arrêt 33 peut être prévu.

Selon un mode de réalisation :
- le dispositif capteur 1 comprend le moyen de mesure du champ magnétique 5 configuré pour émettre un signal de mesure relatif au champ magnétique à proximité dudit moyen de mesure du champ magnétique 5, tel que décrit ci-dessus, et
- le moyen de raccordement 3 comporte un élément de détection 51 réalisé, au moins partiellement, en matériau magnétique, configuré pour émettre un champ magnétique apte à être mesuré par ledit moyen de mesure du champ magnétique 5 du dispositif capteur 1 lorsque ledit dispositif capteur 1 est fixé audit moyen de raccordement 3.

Ainsi, grâce à cette disposition avantageuse de l'invention, et comme expliqué ci-dessus, comme ledit élément de détection 51 est réalisé, au moins partiellement, en matériau magnétique, la valeur du champ magnétique mesuré par ledit moyen de mesure du champ magnétique 5 lorsque ledit élément de détection 51 se trouve à proximité augmente sensiblement. Ainsi, la valeur mesurée du champ magnétique par ledit moyen de mesure du champ magnétique 5, qui dépasse par exemple une valeur seuil fixée, permet de confirmer automatiquement la fixation adéquate, i.e. dans la position souhaitée, du dispositif capteur 1 au moyen de raccordement 3, et donc avantageusement à la paroi 22 d'une enveloppe 21 de conteneur 2, ou encore d'activer ou de désactiver la mise en veille du dispositif capteur 1, comme expliqué ci-dessus.

Selon un mode de réalisation :
- le moyen de mesure du champ magnétique 5 est positionné à proximité du taraudage T16 du moyen de fixation 16,
- l'élément de détection 51 est positionné à proximité du filetage 31 entourant ledit perçage traversant 32.

Comme expliqué ci-dessus, le taraudage T16 du moyen de fixation 16 et le filetage 31 entourant le perçage traversant 32 sont les éléments qui coopèrent directement pour assurer la fixation dans une position souhaitée du dispositif capteur 1 au moyen de raccordement 3, et donc avantageusement à la paroi 22 d'une enveloppe 21 de conteneur 2. De ce fait, un tel positionnement du moyen de mesure du champ magnétique 5 et de l'élément de détection 51 permet d'obtenir un moyen fiable pour s'assurer automatiquement de la fixation adéquate du dispositif capteur 1 au moyen de raccordement 3.

De plus, comme le taraudage T16 du moyen de fixation 16 et le filetage 31 entourant le perçage traversant 32 se trouvent accolés l'un contre l'autre lorsque le dispositif capteur 1 est fixé, de manière adéquate, au moyen de raccordement 3, les dimensions de l'élément de détection 51, et avantageusement du moyen de mesure du champ magnétique 5, peuvent être sensiblement réduite, et permettre néanmoins de détecter une valeur du champ magnétique mesurée par ledit moyen de mesure du champ magnétique 5 caractéristique de la fixation adéquate du dispositif capteur 1 au moyen de raccordement 3, et notamment une valeur du champ magnétique dépassant une valeur seuil fixée.

Selon un mode de réalisation, l'élément de détection 51 est réalisé intégralement en matériau magnétique et présente une forme sensiblement annulaire et est positionné de sorte à entourer le perçage traversant 32 du moyen de raccordement 3.

Comme visible sur l'exemple de réalisation de la figure 6bis, cette disposition avantageuse de l'invention permet de minimiser l'encombrement de l'élément de détection 51 au niveau du moyen de raccordement 3, et sans venir obturer le perçage traversant 32, de sorte à ne pas gêner le passage d'un signal d'émission S13 émis par l'émetteur 13 du capteur de niveau 12 ou celui d'un signal de détection S14 émis par le récepteur 14 du capteur de niveau 12, et donc ne pas entraver le fonctionnement du capteur de niveau 12 du dispositif capteur 1.

Avantageusement, ledit élément de détection 51 peut être reçu dans un logement de forme sensiblement identique à celle de l'élément de détection 51, et donc notamment sensiblement annulaire, débouchant en partie supérieure du moyen de raccordement 3, au-dessus du perçage traversant 32 et du filetage 31, de sorte à faciliter son montage. Ledit logement, et donc ledit élément de détection 51 peuvent avoir leur axe de révolution sensiblement confondu avec celui du perçage traversant 32 et celui du filetage 31. Ledit logement et donc ledit élément de détection 51 peuvent être positionnés selon une direction radiale du perçage traversant entre le filetage 31 et le perçage traversant 32.

La forme annulaire de l'élément de détection 51 et le fait qu'il soit réalisé intégralement en matériau magnétique s'avère également particulièrement avantageux en ce que, dès lors que le dispositif capteur 1 est fixé au moyen de raccordement 3 par le vissage du taraudage T16 sur le filetage 31, le moyen de mesure du champ magnétique 5 se trouve nécessairement en face d'une partie en matériau magnétique de l'élément de détection 51, laquelle est donc apte à émettre un champ magnétique dont la valeur mesurée par ledit moyen de mesure du champ magnétique 5 est caractéristique de la fixation adéquate du dispositif capteur 1 au moyen de raccordement 3, et donc avantageusement à la paroi 22 d'une enveloppe 21 de conteneur 2, et par exemple en dépassant une valeur seuil fixée.

Avantageusement, ledit élément de détection 51 peut être réalisé intégralement en matériau métallique magnétique, et de préférence en Néodyme. Le Néodyme présente en effet l'avantage d'émettre un champ magnétique suffisamment puissant, même avec un élément de détection 51 de dimensions réduites, pour être mesuré par ledit moyen de mesure du champ magnétique 5 lorsqu'il se trouve à proximité dudit élément de détection 51, et permettre de conclure automatiquement à la fixation adéquate du dispositif capteur 1 au moyen de raccordement 3, et sans risque d'erreur, car une telle valeur du champ magnétique mesurée lorsque ledit élément de détection 51 est réalisé en Néodyme est bien supérieure à la valeur du champ magnétique qui pourrait être mesurée à cause de la présence à proximité d'autres éléments en matériau magnétique, et notamment métallique.

L'invention concerne encore un système comprenant :
- un ensemble selon l'un des modes de réalisation décrits précédemment,
- un conteneur 2 comportant une enveloppe 21 étanche, l'enveloppe 21 comprenant une paroi 22, l'enveloppe 21 étant apte à contenir de la matière M, une ouverture 23 étant ménagée dans la paroi 22 de l'enveloppe 21, l'ouverture 23 étant configurée pour mettre en relation l'intérieur et l'extérieur de l'enveloppe 21.

Selon l'invention, le moyen de raccordement 3 est solidarisé à la paroi 22 de l'enveloppe 21 avec son perçage traversant 32 en regard et dans le prolongement de l'ouverture 23 du conteneur 2.

Selon l'invention, le dispositif capteur 1 est fixé de manière amovible au moyen de raccordement 3 avec sa fenêtre de mesure 15 dans le prolongement du perçage traversant 32 du moyen de raccordement 3 et de l'ouverture 23 du conteneur 2, de sorte que l'émetteur 13 du capteur de niveau 12 soit apte à émettre le signal de détection S13 vers l'intérieur de l'enveloppe 21 du conteneur 2 et que le récepteur 14 du capteur de niveau 14 soit apte à recevoir ledit signal de détection réfléchi S14, après réflexion contre la surface libre SL de la matière M à l'intérieur de l'enveloppe 21 du conteneur 2.

L'ensemble des dispositions décrites précédemment concernant le dispositif capteur 1, le moyen de raccordement 3 et le conteneur 2 s'appliquent au système selon l'invention.

Le conteneur 2 de l'ensemble peut notamment être un conteneur dont l'enveloppe 21 présente une contenance supérieure à 300 litres.

Un moyen de vérification (non représenté) peut être prévu, reliant le dispositif capteur 1 au moyen de raccordement 3 ou au conteneur 2, et configuré de sorte à permettre de s'assurer que le dispositif capteur 1 n'a pas été désolidarisé du moyen de raccordement 3, respectivement du conteneur 2. Ledit moyen de vérification peut notamment comprendre un plombage, prévu pour demeurer intact si le dispositif capteur 1 n'a pas été désolidarisé du moyen de raccordement 3, respectivement du conteneur 2.

Selon un mode de réalisation, l'ouverture 23 est ménagée dans une paroi supérieure 22S de l'enveloppe 21 et le dispositif capteur 1 est fixé sur une paroi supérieure 22S de l'enveloppe 21 du conteneur 2.

Cette position de l'ouverture 23 et du dispositif capteur 1 s'avère particulièrement avantageuse, en ce que généralement, la paroi supérieure 22S de l'enveloppe 21 d'un conteneur 2 est dégagée et accessible, contrairement à une paroi inférieure 221 prévue pour reposer sur le sol ou une paroi latérale, qui peut se retrouver à proximité d'un mur. Ainsi, le dispositif capteur 1 est facilement accessible et son installation sur le conteneur 2 est simple et rapide.

Également, et comme visible plus particulièrement sur les exemples de réalisation des figures 1 et 7, la surface libre SL de la matière M à l'intérieur de l'enveloppe 21 du conteneur 2 se trouve généralement en partie supérieure de celle-ci, en vis-à-vis de ladite paroi supérieure 22S de l'enveloppe 21. Le capteur de niveau 12 du dispositif capteur 1 se trouve donc au plus près de la surface libre SL de la matière M, ce qui facilite la mesure du niveau de matière M à l'intérieur de l'enveloppe 21 du conteneur 2, sur laquelle vient se réfléchir le signal de détection S13 émis par l'émetteur 13 du capteur de niveau 12 et former, au moins en partie, ledit signal de détection S14 réfléchi reçu par le récepteur 14.

De plus, une telle disposition du dispositif capteur 1 favorise l'émission de données via le transmetteur de données, quand le dispositif capteur 1 en comporte un, en ce que les ondes émises par ledit transmetteur de données ont moins de risque de croiser des obstacles gênant leur progression.

Une telle disposition du dispositif capteur 1 favorise également la réception de données via le récepteur de données, quand le dispositif capteur 1 en comporte un, en ce que les ondes reçues par ledit récepteur de données ont moins de risque de croiser des obstacles gênant leur progression.

Selon un mode de réalisation, l'enveloppe 21 du conteneur 2 contient de la matière M instable, la matière M instable ayant des caractéristiques évoluant au cours du temps.

Une telle matière M instable peut notamment être de la levure ou du levain, en particulier de la levure ou du levain liquide dont les caractéristiques évoluent au cours du temps à cause des organismes vivants qu'elle renferme.

En effet, une matière M instable ayant des caractéristiques évoluant au cours du temps, il s'avère particulièrement avantageux de pouvoir faire un suivi de ses valeurs caractéristiques au cours du temps, et notamment son volume (correspondant au niveau de matière M à l'intérieur de l'enveloppe 21 du conteneur 2), ou encore sa température (déterminée à l'aide du capteur de température 18 environnante). Le système selon l'invention est donc particulièrement adapté pour le stockage avec une gestion de la logistique facilitée pour de la matière M instable et notamment de la levure ou du levain, en particulier liquide.

Selon un mode de réalisation :
- le dispositif capteur 1 comprend un transpondeur RFID 6 comprenant une mémoire de stockage avec des données relatives au dispositif capteur 1, tel que décrit ci-dessus,
- un transpondeur RFID 7 comprenant une mémoire de stockage avec des données relatives au conteneur 2, est fixé sur l'enveloppe 21 du conteneur 2.

L'ensemble des dispositions décrites précédemment concernant le transpondeur RFID 6 du dispositif capteur 1 peuvent s'appliquer à un tel mode de réalisation de l'ensemble.

De même que ledit transpondeur RFID 6 du dispositif capteur 1, ledit transpondeur RFID 7 peut avantageusement être configuré pour émettre et recevoir des ondes radio en Ultra Hautes Fréquences.

Comme expliqué ci-dessus, les données relatives au dispositif capteur 1 stockées dans la mémoire du transpondeur RFID 6 peuvent notamment comprendre des données permettant l'identification du dispositif capteur 1, comme par exemple une référence unique d'identification.

De la même manière, les données relatives au dispositif capteur 1 stockées dans la mémoire du transpondeur RFID 7 peuvent notamment comprendre des données permettant l'identification du conteneur 2, comme par exemple une référence unique d'identification, ou encore des données comprenant une information sur les dimensions, et notamment sur le volume, de l'enveloppe 21 du conteneur 2.

Ainsi, comme expliqué ci-dessus, le transpondeur RFID 6 du dispositif capteur 1 peut être prévu pour permettre d'effectuer l'identification du dispositif capteur 1, tandis que le transpondeur RDIF 7 du conteneur 2 peut être prévu pour permettre d'effectuer l'identification du conteneur 2, chacun coopérant avec un lecteur RFID, configuré pour lire des données permettant l'identification du dispositif capteur 1 stockées dans la mémoire du transpondeur RFID 6 et/ou pour lire des données permettant l'identification du conteneur 2 stockées dans la mémoire du transpondeur RFID 7.

Avantageusement, comme ledit dispositif capteur 1 est fixé sur ledit conteneur 2, un même lecteur peut effectuer, éventuellement simultanément la lecture des données stockées dans la mémoire du transpondeur RFID 6 du dispositif capteur 1 et des données stockées dans la mémoire du transpondeur RFID 7 du conteneur 2. Un tel lecteur peut par exemple être installé sur un site, dans lequel des conteneurs 2 sont remplis de matière M instable, et dans lequel un dispositif capteur 1 est fixé sur lesdits conteneurs 2 après leur remplissage de matière M instable.

Avantageusement, comme expliqué ci-dessus, ledit transpondeur RFID 6 du dispositif capteur 1 peut être relié, et notamment par au moins une liaison filaire, auxdits moyens électroniques de commande et/ou au transmetteur de données et/ou au récepteur de données, tels que décrits ci-dessus, de sorte à permettre la lecture et/ou l'écriture de données dans la mémoire dudit transpondeur RFID 6 par lesdits moyens électroniques de commande et/ou par l'intermédiaire du transmetteur de données et/ou du récepteur de données.

Cette disposition avantageuse permet de faciliter la configuration du dispositif capteur 1 pour pouvoir remplir de manière optimale sa fonction de détermination du niveau de la matière M dans l'enveloppe 21 du conteneur 2. En effet, pour pouvoir estimer le volume de matière M à l'intérieur de l'enveloppe 21 du conteneur 2 à partir de la mesure du niveau de matière M à l'intérieur de l'enveloppe 21 du conteneur 2 déterminée par ledit capteur de niveau 12, il faut connaître les dimensions de l'enveloppe 21 du conteneur 2. Cependant, il existe une grande variété de conteneurs 2 employés pour le transport de matière instable M, et donc cette information doit être communiquée aux moyens électroniques de commande et/ou au transmetteur de données et/ou au récepteur de données du dispositif capteur 1 dès que celui-ci se trouve fixé sur un nouveau conteneur 2, et de préférence de manière automatisée, et non manuellement par un opérateur, car cela présente de nombreux désavantages.

Ainsi, après que le lecteur ait lu les données stockées dans la mémoire du transpondeur RFID 7 du conteneur 7 relatives à ses dimensions ainsi que celles permettant son identification, ledit lecteur peut également les communiquer au transpondeur RFID 6 du dispositif capteur 1, lequel les stocke dans sa mémoire avant de les communiquer aux moyens électroniques de commande et/ou au transmetteur de données et/ou au récepteur de données, de sorte que la calibration du dispositif capteur 1, en tenant compte des informations relatives aux dimensions du conteneur 2 sur lequel est fixé le dispositif capteur 1, puisse être effectuée automatiquement par l'intermédiaire desdits moyens de commande électronique.

L'invention concerne également, comme représenté sur l'exemple de réalisation de la figure 8, un procédé 100 de nettoyage de l'enveloppe 21 d'un conteneur 2 d'un système selon l'un des modes de réalisation décrit précédemment comprenant :
la désolidarisation 101 du dispositif capteur 1 du moyen de raccordement 3,
l'évacuation 102 du dispositif capteur 1,
le nettoyage 103 de l'enveloppe 21 à une température supérieure à 60°C.

Le nettoyage 103 de l'enveloppe 21 peut être réalisé à haute pression, c'est-à-dire par projection d'un fluide de nettoyage à une pression supérieure à 50 bars.

Le nettoyage 103 de l'enveloppe 21 peut comprendre le nettoyage de l'intérieur et/ou de l'extérieur de l'enveloppe 21 du conteneur 2.

Un tel procédé de nettoyage de l'enveloppe 21 d'un conteneur 2 est particulièrement simple et rapide à mettre en œuvre avec le système selon l'invention, car le dispositif capteur 1 peut être rapidement et simplement désolidarisé du moyen de raccordement 3 et donc de l'enveloppe 21 du conteneur 2 pour procéder au nettoyage de l'enveloppe 21.

Dans le cas où le moyen de raccordement 3 est prévu amovible par rapport à l'enveloppe 21 du conteneur 2, celui-ci peut également être désolidarisé de l'enveloppe 21 au cours dudit procédé 100 de nettoyage, préalablement au nettoyage de ladite enveloppe 21.

Un tel procédé de nettoyage selon l'invention évite également tout risque de détérioration du dispositif capteur 1, et en particulier de ses éléments électroniques, ou encore du moyen de raccordement 3, au cours du nettoyage, à cause des conditions sévères au cours de celui-ci, notamment de la température élevée, notamment supérieure à 50°C, ou encore de la pression importante, notamment supérieure à 50 bars, ou du pH élevé, notamment supérieur à 10, et contrairement au dispositif capteur de la société Nanolike ^{©}, décrit en partie dans la demande de brevet WO 2018219683 A1, qui ne peut être désolidarisé, du moins rapidement et simplement, de l'enveloppe du conteneur préalablement au nettoyage de celle-ci.

Le nettoyage de l'enveloppe 21 à une température supérieure à 60°C peut être réalisé avec un liquide de nettoyage, comme par exemple de l'eau à haute pression.

Selon un exemple particulier, la température de nettoyage peut être supérieure à 70°C.

Après le nettoyage de l'enveloppe 21 du conteneur 2, et éventuellement après le remplissage de celle-ci par de la matière M, le dispositif capteur 1, et éventuellement le moyen de raccordement 3, peu(ven)t être de nouveau fixé(s) à ladite enveloppe 21 du conteneur 2.

L'invention concerne encore, comme représenté sur l'exemple de réalisation de la figure 9, un procédé 200 de suivi à distance d'informations relatives à un conteneur 2 comprenant une enveloppe 21 étanche apte à contenir de la matière M instable, la matière M instable ayant des caractéristiques évoluant au cours du temps, à l'aide d'un dispositif capteur 1 selon l'un des modes de réalisation décrit précédemment, le procédé comprenant :
la mesure 201 du niveau de matière M à l'intérieur de l'enveloppe 21 du conteneur 2,
la génération 202 de données représentatives du niveau de matière M à l'intérieur de l'enveloppe 21 du conteneur 2,
la transmission 203 des données représentatives du niveau de matière M à l'intérieur de l'enveloppe 21 du conteneur 2.

Un tel procédé 200 de suivi à distance d'informations relatives à un conteneur 2 est particulièrement aisé à mettre en œuvre avec le dispositif capteur 1 selon l'invention. Il facilite également la gestion de la logistique à distance du conteneur 2, et encore avantageusement d'un parc comportant une pluralité de conteneurs 2, répartis dans différents endroits sur une vaste étendue géographique.

En effet, en suivant à distance le niveau de matière M à l'intérieur de l'enveloppe 21 d'un conteneur 2, il est possible d'anticiper le moment où il faudra organiser le rapatriement du conteneur 2 vide et éventuellement prévoir son remplacement par un autre conteneur 2 rempli de ladite matière M.

Selon un exemple particulier de réalisation, le procédé 200 selon l'invention est employé pour le suivi de conteneur 2 contenant de la levure ou du levain, et notamment de la levure ou du levain liquide.

Dans le cas où ledit dispositif capteur 1 comporte un moyen de géolocalisation 17, le procédé 200 peut également comprendre :
la détermination de la position géographique du conteneur 2,
la génération de données représentatives de la position géographique du conteneur 2,
la transmission des données représentatives de la position géographique du conteneur 2.

Également, dans le cas où ledit dispositif capteur 1 comporte en outre un capteur de température 18, le procédé 200 peut également comprendre :
la détermination de la température environnante du conteneur 2,
la génération de données représentatives de la température environnante du conteneur 2,
la transmission des données représentatives de la température environnante du conteneur 2.

L'invention concerne également un circuit de traitement 300 configuré pour exécuter un procédé 200 selon l'un des modes de réalisation décrit précédemment.

Le circuit de traitement 300 peut être par exemple, comme visible sur l'exemple de réalisation de la figure 10 :
- un processeur 301 adapté pour interpréter des instructions en langage informatique, le processeur 301 peut comprendre, ou peut être associé à une unité de mémoire 302 comprenant des instructions, ou
- l'association d'un processeur 301 et d'une unité de mémoire 302, le processeur 301 pouvant être adapté pour interpréter des instructions en langage informatique, l'unité de mémoire 302 comprenant lesdites instructions, ou,
- une puce électronique programmable telle qu'une puce FPGA (pour «Field Arrayable Gate Array»).

Le processeur 301 peut par exemple être un processeur 301, et notamment un microprocesseur, d'ordinateur.

L'invention concerne encore une unité de mémoire 302 lisible par un processeur 301 comprenant des instructions 303 qui, lorsqu'elles sont exécutées par le processeur 301, conduisent celui-ci à mettre en œuvre le procédé selon l'un des modes de réalisation décrit précédemment.

Les modes de réalisation d'une unité de mémoire 302 lisible par un processeur 301 incluent, de manière non exhaustive, des supports de stockage informatique et des supports de communication, y compris tout support facilitant le transfert d'un programme d'ordinateur d'un endroit vers un autre. Par «support(s) de stockage informatique», on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur 301.

En outre, diverses formes d'unités de mémoire 302 lisibles par un processeur 301 peuvent transmettre ou porter des instructions vers un processeur 301, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel).

Le circuit de traitement 300, et notamment la mémoire 302 et/ou ledit processeur 301, peu(ven)t être configuré(s) pour communiquer avec un moyen utilisant la technologie RFID, et notamment la technologie RFID dual-mode, afin de permettre notamment le transfert de données au circuit de traitement 300 ou à la mémoire 302 coopérant avec le processeur 301.

Les instructions 303 peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

Naturellement, d'autres modes de réalisation auraient pu être envisagés par l'Homme du métier sans pour autant sortir du cadre de l'invention définie par les revendications ci-après.

### Liste des signes de référence

1. Dispositif capteur
11. Coque
111. Partie inférieure
11S. Partie supérieure
12. Capteur de niveau
P12. Paroi de séparation optique
13. Emetteur
S13. Signal de détection
R13₁ ... R13ₙ. Rayon lumineux d'émission
O13. Origine
14. Récepteur
F14. Face plane
S14. Signal de détection réfléchi
R14₁ ... R14ₙ. Rayon lumineux réfléchi de détection
P14₁ ... P14ₙ. Unité de détection
M14₁ ... M14ₙ. Signal de mesure
Q1. Première quantité
Q2. Deuxième quantité
15. Fenêtre de mesure
16. Moyen de fixation
T16. Taraudage
17. Moyen de géolocalisation
18. Capteur de température
E19. R19. Lentille
2. Conteneur
21. Enveloppe
22. Paroi
221. Paroi inférieure
22S. Paroi supérieure
23. Ouverture
24. Paroi latérale
3. Moyen de raccordement
31. Filetage
32. Perçage traversant
33. Première paroi d'arrêt
34. Deuxième paroi d'arrêt
4. Interface utilisateur
41. Affichage
42. Diode électroluminescente
43. Inscription
44. Bouton d'actionnement
5. Moyen de mesure du champ magnétique
51. Elément de détection
6, 7. Transpondeur RFID
SL. Surface libre
M. Matière
H. Hauteur
300. Circuit de traitement
301. Processeur
302. Unité de mémoire

## Revendications

1. Dispositif capteur (1) pour mesurer le niveau de matière (M) dans un conteneur (2), le conteneur (2) comprenant une enveloppe (21) étanche configurée pour contenir de la matière (M) définissant une surface libre (SL) d'un liquide à l'intérieur de l'enveloppe (21),
le dispositif capteur (1) comprenant :
- une coque (11),
- au moins un capteur de niveau (12), sans contact, comprenant un émetteur (13) configuré pour émettre un signal de détection (S13), et un récepteur (14) configuré pour recevoir un signal de détection réfléchi (S14), le signal de détection réfléchi (S14) comprenant le signal de détection (S13) après réflexion, ledit capteur de niveau (12) étant logé à l'intérieur de la coque (11),
dans lequel la coque (11) comporte une fenêtre de mesure (15) autorisant le passage du signal de détection (S13) émis par ledit émetteur (13) depuis l'intérieur de la coque (11) vers l'intérieur de l'enveloppe (21) du conteneur (2) et le passage du signal de détection réfléchi (S14), après réflexion contre la surface libre (SL) de la matière (M) à l'intérieur de l'enveloppe (21) du conteneur (2), depuis l'intérieur de l'enveloppe (21) du conteneur (2) vers ledit récepteur (14) à l'intérieur de la coque (11),
le dispositif capteur (1) comprenant en outre un moyen de fixation (16) solidaire de la coque (11), configuré de sorte à permettre la fixation amovible du dispositif capteur (1), à l'extérieur de l'enveloppe (21) du conteneur (2), sur un moyen de raccordement (3) solidaire d'une paroi (22) de l'enveloppe (21) du conteneur (2),
avec la fenêtre de mesure (15) de la coque (11) positionnée en regard d'une ouverture (23) correspondante ménagée dans la paroi (22) de l'enveloppe (21) du conteneur (2),
le capteur de niveau (12) étant configuré pour émettre un signal de mesure relatif au niveau de la matière (M) à l'intérieur de l'enveloppe (21) du conteneur (2) en fonction du signal de détection réfléchi (S14) reçu par le récepteur (14),
**caractérise en ce que**:
- l'émetteur (13) est configuré de sorte à émettre un signal de détection (S13) comportant une pluralité de rayons lumineux d'émission (R13₁ ... R13ₙ) ayant avantageusement une origine (013) commune au niveau de l'émetteur (13), au moins deux rayons lumineux d'émission (R13₁ ... R13ₙ) présentant chacun une orientation différente par rapport audit émetteur (13), et notamment de sorte que l'ensemble des rayons lumineux d'émission (R13₁ ... R13ₙ) forment sensiblement un cône d'origine (013), et de sorte que le signal de détection réfléchi (S14) reçu par le récepteur (14) comporte une pluralité de rayons lumineux de détection réfléchis (R14₁ ... R14ₙ), chacun formé par un rayon lumineux d'émission (R13₁ ... R13ₙ) du signal de détection (S13) émis par l'émetteur (13) après au moins une réflexion contre une paroi (22, 24) de l'enveloppe (21) du conteneur (2) et/ou contre la surface libre (SL) de la matière (M) à l'intérieur de l'enveloppe (21) du conteneur (2),
- le récepteur (14) comporte une pluralité d'unités de réception (P14₁ ... P14ₙ) réparties de manière régulière sur une surface sensiblement plane (F14) orientée vers la fenêtre de mesure (15), et configuré de sorte à recevoir uniquement un seul rayon de détection réfléchi (R14₁ ... R14ₙ) du signal de détection réfléchi (S14), le récepteur (14) étant configurée de sorte à émettre autant de signaux de mesure (M14₁ ... M14ₙ) que d'unités de réception (P14₁ ... P14ₙ), éventuellement distincts, chacun déterminé en fonction du rayon de détection réfléchi (R14₁ ... R14ₙ) unique reçu au niveau de chaque unité de réception (P14₁ ... P14ₙ),
- le signal de mesure émis par ledit capteur de niveau (12) relatif au niveau de la matière (M) à l'intérieur de l'enveloppe (21) du conteneur (2) étant déterminé en fonction des différentes signaux de mesure (M14₁ ... M14ₙ) émis par le récepteur (14) déterminés à partir des différentes unités de réception (P14₁ ... P14ₙ).

2. Dispositif (1) selon la revendication 1, dans lequel le moyen de fixation (16) comprend un taraudage (T16) entourant ladite fenêtre de mesure (15), le taraudage (T16) étant configuré pour coopérer par vissage/dévissage avec un filetage (31) du moyen de raccordement (3), le filetage (31) étant configuré pour entourer l'ouverture (23) du conteneur (2).

3. Dispositif (1) selon l'une des revendications 1 à 2, comprenant en outre un moyen de géolocalisation (17), configuré pour émettre un signal permettant de déterminer la position géographique du dispositif capteur (1).

4. Dispositif (1) selon l'une des revendications 1 à 3 comprenant une interface utilisateur (4) reliée audit capteur de niveau (12), l'interface utilisateur (4) comprenant un affichage (41) configuré de sorte à afficher une information relative au niveau de matière (M) à l'intérieur de l'enveloppe (21) du conteneur (2) dépendante du signal de mesure émis par ledit capteur de niveau (12), de préférence l'affichage (41) comprend une pluralité de diodes électroluminescentes (42) associées à une pluralité d'inscriptions (43) et l'interface utilisateur (4) comprend au moins un bouton d'actionnement (44), relié à l'affichage (41), le bouton d'actionnement (44) étant configuré pour déclencher une mesure de niveau de la matière (M) à l'intérieur de l'enveloppe (21) du conteneur (2) par le capteur de niveau (12) et l'affichage d'une information relative au niveau de matière (M) à l'intérieur de l'enveloppe (21) du conteneur (2).

5. Dispositif (1) selon l'une des revendications 1 à 4, comprenant en outre un transmetteur de données, configuré de sorte à envoyer des données du capteur de niveau (12) vers un serveur distant, de préférence via un réseau cellulaire bas débit sur une fréquence comprise entre 800 MHz et 1000 MHz, les données comprenant des données relatives au niveau de matière (M) à l'intérieur de l'enveloppe (12) du conteneur (2) établies à partir du signal de mesure émis par le capteur de niveau (12).

6. Dispositif (1) selon l'une des revendications 1 à 5 comprenant en outre un capteur de température (18), configuré de sorte à mesurer la température environnante du dispositif (1).

7. Dispositif (1) selon l'une des revendications 1 à 6, comprenant en outre un moyen de mesure du champ magnétique (5) configuré pour émettre un signal de mesure relatif au champ magnétique à proximité dudit moyen de mesure du champ magnétique (5), ledit moyen de mesure du champ magnétique (5) étant avantageusement solidaire de la coque 11, et notamment positionné au niveau du moyen de fixation (16).

8. Dispositif (1) selon l'une des revendications 1 à 7, comprenant en outre un transpondeur RFID (6) comprenant une mémoire avec des données relatives au dispositif capteur (1).

9. Dispositif (1) selon l'une des revendications 1 à 8, dans lequel :
- l'émetteur (13) est configuré pour émettre un signal de détection (S13) optique, au moins une lentille (E19) étant intercalée entre l'émetteur (13) et la fenêtre de mesure (15),
- le récepteur (14) est configuré pour recevoir un signal de détection réfléchi (S14) optique, au moins une lentille (E19) étant intercalée entre le récepteur (14), et la fenêtre de mesure (15).

10. Dispositif (1) selon l'une des revendications 1 à 9, dans lequel une paroi de séparation optique (P12) sépare l'émetteur (13) du récepteur (14), ladite paroi de séparation optique (P12) étant configuré de sorte à empêcher un signal de détection (S13) optique émis par ledit récepteur (13) d'atteindre ledit récepteur (14) sans avoir traversé ladite fenêtre de mesure (15) de sorte à sortir de la coque (11).

11. Dispositif (1) selon l'une quelconque des revendications précédentes, dans lequel le signal de mesure émis par le capteur de niveau (12) relatif au niveau de la matière (M) à l'intérieur de l'enveloppe (21) du conteneur (2) est déterminé en :
/a/ considérant une première quantité (Q1) de signaux de mesure (M14₁ ... M14ₙ) émis par le récepteur (14) déterminés à partir d'une première quantité (Q1) d'unités de réception (P14₁ ... P14ₙ), telle que lesdits signaux de mesure (M14₁ ... M14ₙ) de ladite première quantité (Q1) correspondent chacun à un temps de parcours d'un rayon lumineux d'émission (R13₁ ... R13ₙ) réfléchi uniquement par la surface libre (SL) de la matière (M) dans l'enveloppe (21) du conteneur (2) avant de former un rayon lumineux de détection réfléchi (R14₁ ... R14ₙ), chacun desdits signaux de mesure (M14₁ ... M14ₙ) de la première quantité (Q1) étant avantageusement sensiblement identique,
/b/ considérant une deuxième quantité (Q2) de signaux de mesure (M14₁ ... M14ₙ) émis par le récepteur (14) déterminés à partir d'une deuxième quantité (Q2) d'unités de réception (P14₁ ... P14ₙ), telle que lesdits signaux de mesure (M14₁ ... M14ₙ) de ladite deuxième quantité (Q2) correspondent chacun à un temps de parcours d'un rayon lumineux d'émission (R13₁ ... R13ₙ) réfléchi par au moins une paroi (24), et notamment une paroi latérale (24), de l'enveloppe (21) et par la surface libre (SL) de la matière (M) dans l'enveloppe (21) du conteneur (2), avant et/ou après avoir été réfléchi par ladite paroi (24) de l'enveloppe (21), avant de former un rayon lumineux de détection réfléchi (R14₁ ... R14ₙ), et strictement supérieur au temps de parcours correspondant aux signaux de mesure (M14₁ ... M14ₙ) de la première quantité (Q1), chacun desdits signaux de mesure (M14₁ ... M14ₙ) de la deuxième quantité (Q2) étant avantageusement différent des signaux de mesure (M14₁ ... M14ₙ) de la première quantité (Q1),
/c/ discriminant les signaux de mesure (M14₁ ... M14ₙ) de la deuxième quantité (Q2) de signaux de mesure (M14₁ ... M14ₙ) et en ne tenant compte que des signaux de mesure (M14₁ ... M14ₙ) de la première quantité (Q1) de signaux de mesure (M14₁ ... M14ₙ) pour déterminer le signal de mesure émis par le capteur de niveau (12), par exemple en effectuant une moyenne des signaux de mesure (M14₁ ... M14ₙ) de la première quantité (Q1).

12. Ensemble comprenant :
- un dispositif capteur (1) selon l'une des revendications 1 à 11,
- un moyen de raccordement (3), apte à être solidarisé à une paroi (22) de l'enveloppe (21) d'un conteneur (2),
dans lequel le moyen de raccordement (3) présente un perçage traversant (32) prévu pour être positionné en regard et dans le prolongement d'une ouverture (23) ménagée dans ladite paroi (22) de l'enveloppe (21) du conteneur (2),
et dans lequel le dispositif capteur (1) est configuré pour être fixé de manière amovible sur le moyen de raccordement (3) par l'intermédiaire de son moyen de fixation (16) avec la fenêtre de mesure (15) de sa coque (11) en regard et dans le prolongement du perçage traversant (32) du moyen de raccordement (3) et de l'ouverture (23) ménagée dans la paroi (22) de l'enveloppe (21) du conteneur (2), ledit perçage traversant (32) étant configuré pour être traversé par le signal de détection (S13) émis par l'émetteur (13) et par le signal de détection réfléchi (S14) destiné à être reçu par le récepteur (14).

13. Ensemble selon la revendication 12, dans lequel :
- le moyen de fixation (16) du dispositif capteur (1) comprend un taraudage (T16) entourant la fenêtre de mesure (15) de la coque (11) du dispositif capteur (1) et
- le moyen de raccordement (3) comporte un filetage (31) entourant ledit perçage traversant (32), le filetage (31) étant configuré pour entourer l'ouverture (23) ménagée dans la paroi (22) de l'enveloppe (21) du conteneur (2), le filetage (31) étant configuré pour coopérer avec ledit taraudage (T16) du moyen de fixation (16) pour assurer la fixation amovible du dispositif capteur (1) sur ledit moyen de raccordement (3) par vissage/dévissage.

14. Ensemble selon l'une des revendications 12 ou 13, avec un dispositif capteur (1) selon la revendication 7, dans lequel le moyen de raccordement (3) comporte un élément de détection (51) réalisé, au moins partiellement, en matériau magnétique, configuré pour émettre un champ magnétique apte à être mesuré par ledit moyen de mesure du champ magnétique (5) du dispositif capteur (1) lorsque ledit dispositif capteur (1) est fixé audit moyen de raccordement (3), de préférence dans lequel
- le moyen de mesure du champ magnétique (5) est positionné à proximité du taraudage (T16) du moyen de fixation (16),
- l'élément de détection (51) est positionné à proximité du filetage (31) entourant ledit perçage traversant (32).

15. Système comprenant :
- un ensemble selon l'une des revendications 12 à 14,
- un conteneur (2) comportant une enveloppe (21) étanche, l'enveloppe (21) comprenant une paroi (22), l'enveloppe (21) étant apte à contenir de la matière (M) à l'intérieur, de préférence la matière (M) est une matière instable ayant des caractéristiques évoluant au cours du temps comme de la levure ou du levain, le conteneur comportant en outre une ouverture (23) ménagée dans la paroi (22) de l'enveloppe (21), l'ouverture (23) étant configurée pour mettre en relation l'intérieur et l'extérieur de l'enveloppe (21),
et dans lequel le moyen de raccordement (3) est solidarisé à la paroi (22) de l'enveloppe (21) avec son perçage traversant (32) en regard et dans le prolongement de l'ouverture (23) du conteneur (2),
et dans lequel le dispositif capteur (1) est fixé de manière amovible au moyen de raccordement (3) avec sa fenêtre de mesure (15) dans le prolongement du perçage traversant (32) du moyen de raccordement (3) et de l'ouverture (23) du conteneur (2), de sorte que l'émetteur (13) du capteur de niveau (12) soit apte à émettre le signal de détection (S13) vers l'intérieur de l'enveloppe (21) du conteneur (2) et que le récepteur (14) du capteur de niveau (12) soit apte à recevoir ledit signal de détection réfléchi (S14), après réflexion contre la surface libre (SL) de la matière (M) à l'intérieur de l'enveloppe (21) du conteneur (2), de préférence dans laquelle l'ouverture (23) est ménagée dans une paroi supérieure (22S) de l'enveloppe (21) et le dispositif capteur (1) est fixé sur une paroi supérieure (22S) de l'enveloppe (21) du conteneur (2).

16. Système selon la revendication précédente, comprenant un ensemble avec un dispositif capteur (1) selon la revendication 8, dans lequel un transpondeur RFID (7) comprenant une mémoire de stockage avec des données relatives au conteneur (2), est fixé sur l'enveloppe (21) du conteneur (2).

17. Procédé de configuration d'un dispositif capteur appartenant à un système selon la revendication 16, le procédé étant mis en œuvre par le système selon la revendication précédente, le procédé comprenant :
- interroger le transpondeur RFID (7) fixé sur l'enveloppe du conteneur pour obtenir des informations relatives au conteneur par lecture de la mémoire du transpondeur RFID (7) fixé sur l'enveloppe du conteneur,
- réceptionner par le transpondeur RFID (6) dudit dispositif capteur les informations relatives au conteneur pour les stocker dans la mémoire dudit transpondeur RFID (6) dudit dispositif capteur,
- transmettre, par au moins une liaison filaire, les informations relatives au conteneur qui sont stockées dans la mémoire dudit transpondeur RFID (6) aux moyens électroniques de commande et/ou au transmetteur de données et/ou au récepteur de données dudit dispositif capteur.

18. Procédé selon la revendication précédente, dans lequel un lecteur RFID est utilisé pour interroger le transpondeur RFID (7) fixé sur l'enveloppe de manière à récupérer des informations relatives au conteneur, et est utilisé pour communiquer lesdites informations relatives au conteneur au transpondeur RFID (6) dudit dispositif capteur.

19. Procédé selon l'une des revendications précédentes 17 ou 18 dans lequel les informations relatives au conteneur sont choisies parmi une référence unique indentification dudit conteneur, d'un volume et/ou au moins une dimension dudit conteneur.

20. Procédé (200) de suivi à distance d'informations relatives à un conteneur (2) comprenant une enveloppe étanche (21) apte à contenir de la matière (M) instable, la matière (M) instable ayant des caractéristiques évoluant au cours du temps, à l'aide d'un dispositif capteur (1) selon l'une des revendications 1 à 11,
le procédé comprenant :
la mesure (201) du niveau de matière (M) à l'intérieur de l'enveloppe (21) du conteneur (2),
la génération (202) de données représentatives du niveau de matière (M) à l'intérieur de l'enveloppe (21) du conteneur (2),
la transmission (203) des données représentatives du niveau de matière (M) à l'intérieur de l'enveloppe (21) du conteneur (2).

21. Circuit de traitement (300) configuré pour exécuter un procédé selon la revendication 19 et/ou la revendication 20.

22. Unité de mémoire (302) lisible par un processeur comprenant des instructions (303) qui, lorsqu'elles sont exécutées par le processeur, conduisent celui-ci à mettre en œuvre le procédé selon la revendication 19 et/ou la revendication 20.

## Patentansprüche

1. Sensorvorrichtung (1), um den Füllstand von Material (M) in einem Behälter (2) zu messen, wobei der Behälter (2) eine dichte Hülle (21) umfasst, welche dazu ausgebildet ist, Material (M) zu fassen, welches eine freie Oberfläche (SL) einer Flüssigkeit im Inneren der Hülle (21) definiert,
wobei die Sensorvorrichtung (1) umfasst:
- ein Gehäuse (11),
- mindestens einen berührungslosen Füllstandssensor (12), umfassend einen Sender (13), welcher dazu ausgebildet ist, ein Erfassungssignal (S13) auszusenden, und einen Empfänger (14), welcher dazu ausgebildet ist, ein reflektiertes Erfassungssignal (S14) zu empfangen, wobei das reflektierte Erfassungssignal (S14) das Erfassungssignal (S13) nach Reflexion umfasst, wobei der Füllstandssensor (12) im Inneren des Gehäuses (11) untergebracht ist,
wobei das Gehäuse (11) ein Messfenster (15) umfasst, welches den Durchgang des von dem Sender (13) ausgesendeten Erfassungssignals (S13) von dem Inneren des Gehäuses (11) zu dem Inneren der Hülle (21) des Behälters (2) und den Durchgang des reflektierten Erfassungssignals (S14), nach Reflexion an der freien Oberfläche (SL) des Materials (M) im Inneren der Hülle (21) des Behälters (2), von dem Inneren der Hülle (21) des Behälters (2) zu dem Empfänger (14) im Inneren des Gehäuses (11) erlaubt,
wobei die Sensorvorrichtung (1) ferner ein mit dem Gehäuse (11) fest verbundenes Befestigungsmittel (16) umfasst, das derart ausgebildet ist, dass es die lösbare Befestigung der Sensorvorrichtung (1) außerhalb der Hülle (21) des Behälters (2) an einem Anschlussmittel (3) ermöglicht, welches fest mit einer Wand (22) der Hülle (21) des Behälters (2) verbunden ist, mit dem Messfenster (15) des Gehäuses (11) positioniert gegenüber einer entsprechenden Öffnung (23) in der Wand (22) der Hülle (21) des Behälters (2),
wobei der Füllstandssensor (12) dazu ausgebildet ist, ein Messsignal bezüglich des Füllstands des Materials (M) im Inneren der Hülle (21) des Behälters (2), in Abhängigkeit von dem von dem Empfänger (14) empfangenen reflektierten Erfassungssignal (S14), auszusenden,
**dadurch gekennzeichnet, dass**:
- der Sender (13) dazu ausgebildet ist, ein Erfassungssignal (S13) auszusenden, welches eine Vielzahl von Sendelichtstrahlen (R13₁ ... R13ₙ) umfasst, welche vorteilhafterweise einen gemeinsamen Ursprung (O13) auf Höhe des Senders (13) aufweisen, wobei mindestens zwei Sendelichtstrahlen (R13₁ ... R13ₙ) jeweils eine unterschiedliche Ausrichtung in Bezug auf den Sender (13) aufweisen, und insbesondere derart, dass die Gesamtheit der Sendelichtstrahlen (R13₁ ... R13ₙ) im Wesentlichen einen Kegel mit dem Ursprung (O13) bilden, und derart, dass das von dem Empfänger (14) empfangene reflektierte Erfassungssignal (S14) eine Vielzahl von reflektierten Erfassungslichtstrahlen (R14₁ ... R14ₙ) umfasst, wobei jeder durch einen Sendelichtstrahl (R13₁ ... R13ₙ) des von dem Sender (13) ausgesendeten Erfassungssignals (S13) nach mindestens einer Reflexion an einer Wand (22, 24) der Hülle (21) des Behälters (2) und/oder an der freien Oberfläche (SL) des Materials (M) im Inneren der Hülle (21) des Behälters (2) gebildet wird,
- der Empfänger (14) eine Vielzahl von Empfangseinheiten (P14₁ ... P14ₙ) umfasst, welche gleichmäßig auf einer im Wesentlichen ebenen Fläche (F14) verteilt sind, welche zu dem Messfenster (15) hin ausgerichtet ist, und welcher derart ausgebildet ist, dass er nur einen einzigen reflektierten Erfassungslichtstrahl (R14₁ ... R14ₙ) des reflektierten Erfassungssignals (S14) empfängt, wobei der Empfänger (14) derart ausgebildet ist, dass er ebenso viele Messsignale (M14₁ ... M14ₙ) wie Empfangseinheiten (P14₁ ... P14ₙ) aussendet, die gegebenenfalls voneinander verschieden sind, wobei jedes in Abhängigkeit von dem an der jeweiligen Empfangseinheit (P14₁ ... P14ₙ) empfangenen einzigen reflektierten Erfassungslichtstrahl (R14₁ ... R14ₙ) bestimmt wird,
- das von dem Füllstandssensor (12) ausgesendete Messsignal bezüglich des Füllstands des Materials (M) im Inneren der Hülle (21) des Behälters (2) in Abhängigkeit von den verschiedenen, von dem Empfänger (14) ausgesendeten Messsignalen (M14₁ ... M14ₙ) bestimmt wird, welche anhand der verschiedenen Empfangseinheiten (P14₁ ... P14ₙ) ermittelt werden.

2. Vorrichtung (1) nach Anspruch 1, wobei das Befestigungsmittel (16) ein Innengewinde (T16) umfasst, welches das Messfenster (15) umgibt, wobei das Innengewinde (T16) dazu ausgebildet ist, um durch Ein-/Ausschrauben mit einem Außengewinde (31) des Anschlussmittels (3) zusammenzuwirken, wobei das Außengewinde (31) dazu ausgebildet ist, die Öffnung (23) des Behälters (2) zu umgeben.

3. Vorrichtung (1) nach einem der Ansprüche 1 bis 2, ferner umfassend ein Geolokalisierungsmittel (17), welches dazu ausgebildet ist, ein Signal auszusenden, welches es ermöglicht, die geographische Position der Sensorvorrichtung (1) zu bestimmen.

4. Vorrichtung (1) nach einem der Ansprüche 1 bis 3, umfassend eine mit dem Füllstandssensor (12) verbundene Benutzerschnittstelle (4), wobei die Benutzerschnittstelle (4) eine Anzeige (41) umfasst, die dazu ausgebildet ist, eine Information bezüglich des Füllstands des Materials (M) im Inneren der Hülle (21) des Behälters (2) anzuzeigen, abhängig von dem von dem Füllstandssensor (12) ausgesendeten Messsignal, wobei die Anzeige (41) vorzugsweise eine Vielzahl von Leuchtdioden (42) umfasst, welche einer Vielzahl von Beschriftungen (43) zugeordnet sind, und die Benutzerschnittstelle (4) mindestens eine Betätigungstaste (44) umfasst, welche mit der Anzeige (41) verbunden ist, wobei die Betätigungstaste (44) dazu ausgebildet ist, eine Messung des Füllstands des Materials (M) im Inneren der Hülle (21) des Behälters (2) durch den Füllstandssensor (12) und die Anzeige einer Information bezüglich des Füllstands des Materials (M) im Inneren der Hülle (21) des Behälters (2) auszulösen.

5. Vorrichtung (1) nach einem der Ansprüche 1 bis 4, ferner umfassend einen Datensender, welcher dazu ausgebildet ist, Daten des Füllstandssensors (12) an einen entfernten Server zu senden, vorzugsweise über ein zellulares Schmalband-Netzwerk auf einer Frequenz zwischen 800 MHz und 1000 MHz, wobei die Daten Daten bezüglich des Füllstands des Materials (M) im Inneren der Hülle (12) des Behälters (2) umfassen, welche anhand des von dem Füllstandssensor (12) ausgesendeten Messsignals erstellt werden.

6. Vorrichtung (1) nach einem der Ansprüche 1 bis 5, ferner umfassend einen Temperatursensor (18), welcher dazu ausgebildet ist, die Umgebungstemperatur der Vorrichtung (1) zu messen.

7. Vorrichtung (1) nach einem der Ansprüche 1 bis 6, ferner umfassend ein Magnetfeldmessmittel (5), welches dazu ausgebildet ist, ein Messsignal bezüglich des Magnetfelds in der Nähe des Magnetfeldmessmittels (5) auszusenden, wobei das Magnetfeldmessmittel (5) vorteilhafterweise fest mit dem Gehäuse (11) verbunden ist, und insbesondere auf Höhe des Befestigungsmittels (16) angeordnet ist.

8. Vorrichtung (1) nach einem der Ansprüche 1 bis 7, ferner umfassend einen RFID-Transponder (6), umfassend einen Speicher mit Daten bezüglich der Sensorvorrichtung (1).

9. Vorrichtung (1) nach einem der Ansprüche 1 bis 8, wobei:
- der Sender (13) dazu ausgebildet ist, ein optisches Erfassungssignal (S13) auszusenden, wobei mindestens eine Linse (E19) zwischen den Sender (13) und das Messfenster (15) gestellt ist,
- der Empfänger (14) dazu ausgebildet ist, ein optisch reflektiertes Erfassungssignal (S14) zu empfangen, wobei mindestens eine Linse (E19) zwischen den Empfänger (14) und das Messfenster (15) gestellt ist.

10. Vorrichtung (1) nach einem der Ansprüche 1 bis 9, wobei eine optische Trennwand (P12) den Sender (13) von dem Empfänger (14) trennt, wobei die optische Trennwand (P12) derart ausgebildet ist, dass sie verhindert, dass ein von dem Sender (13) ausgesendetes optisches Erfassungssignal (S13) den Empfänger (14) erreicht, ohne das Messfenster (15) durchquert zu haben, um aus dem Gehäuse (11) auszutreten.

11. Vorrichtung (1) nach einem der vorangegangenen Ansprüche, wobei das von dem Füllstandssensor (12) ausgesendete Messsignal bezüglich des Füllstands des Materials (M) im Inneren der Hülle (21) des Behälters (2) bestimmt wird durch:
/a/ Berücksichtigung einer ersten Menge (Q1) von Messsignalen (M14₁ ... M14ₙ), welche von dem Empfänger (14) ausgesendet werden und anhand einer ersten Menge (Q1) von Empfangseinheiten (P14₁ ... P14ₙ) bestimmt werden, derart, dass die Messsignale (M14₁ ... M14ₙ) der ersten Menge (Q1) jeweils einer Laufzeit eines Sendelichtstrahls (R13₁ ... R13ₙ) entsprechen, welcher ausschließlich an der freien Oberfläche (SL) des Materials (M) in der Hülle (21) des Behälters (2) reflektiert wird, bevor er einen reflektierten Erfassungslichtstrahl (R14₁ ... R14ₙ) bildet, wobei die Messsignale (M14₁ ... M14ₙ) der ersten Menge (Q1) vorteilhafterweise im Wesentlichen identisch sind,
/b/ Berücksichtigung einer zweiten Menge (Q2) von Messsignalen (M14₁ ... M14ₙ), die von dem Empfänger (14) ausgesendet werden und anhand einer zweiten Menge (Q2) von Empfangseinheiten (P14₁ ... P14ₙ) bestimmt werden, derart, dass die Messsignale (M14₁ ... M14ₙ) der zweiten Menge (Q2) jeweils einer Laufzeit eines Sendelichtstrahls (R13₁ ... R13ₙ) entsprechen, welcher an mindestens einer Wand (24), und insbesondere einer Seitenwand (24), der Hülle (21) und an der freien Oberfläche (SL) des Materials (M) in der Hülle (21) des Behälters (2) reflektiert wird, bevor und/oder nachdem er an der Wand (24) der Hülle (21) reflektiert wurde, bevor er einen reflektierten Erfassungslichtstrahl (R14₁ ... R14ₙ) bildet, und die strikt größer ist als die Laufzeit, die den Messsignalen (M14₁ ... M14ₙ) der ersten Menge (Q1) entspricht, wobei die Messsignale (M14₁ ... M14ₙ) der zweiten Menge (Q2) vorteilhafterweise von den Messsignalen (M14₁ ... M14ₙ) der ersten Menge (Q1) verschieden sind,
/c/ Diskriminierung der Messsignale (M14₁ ... M14ₙ) der zweiten Menge (Q2) der Messsignale (M14₁ ... M14ₙ), und ausschließliche Berücksichtigung der Messsignale (M14₁ ... M14ₙ) der ersten Menge (Q1) der Messsignale (M14₁ ... M14ₙ), um das von dem Füllstandssensor (12) ausgesendete Messsignal zu bestimmen, beispielsweise durch Bildung eines Mittelwerts der Messsignale (M14₁ ... M14ₙ) der ersten Menge (Q1).

12. Anordnung, umfassend:
- eine Sensorvorrichtung (1) nach einem der Ansprüche 1 bis 11,
- ein Anschlussmittel (3), welches dazu geeignet ist, mit einer Wand (22) der Hülle (21) eines Behälters (2) fest verbunden zu sein,
wobei das Anschlussmittel (3) eine Durchgangsbohrung (32) umfasst, welche dazu vorgesehen ist, gegenüber und in Verlängerung einer in der Wand (22) der Hülle (21) des Behälters (2) vorgesehenen Öffnung (23) positioniert zu werden,
und wobei die Sensorvorrichtung (1) dazu ausgebildet ist, lösbar am Anschlussmittel (3) durch ihr Befestigungsmittel (16) befestigt zu werden, wobei das Messfenster (15) ihres Gehäuses (11) gegenüber und in Verlängerung der Durchgangsbohrung (32) des Anschlussmittels (3) und der in der Wand (22) der Hülle (21) des Behälters (2) vorgesehenen Öffnung (23) angeordnet ist, wobei die Durchgangsbohrung (32) dazu ausgebildet ist, von dem Erfassungssignal (S13), ausgesendet von dem Sender (13), und von dem reflektierten Erfassungssignal (S14), bestimmt, um von dem Empfänger (14) empfangen zu werden, durchquert zu werden.

13. Anordnung nach Anspruch 12, wobei:
- das Befestigungsmittel (16) der Sensorvorrichtung (1) ein Innengewinde (T16) umfasst, welches das Messfenster (15) des Gehäuses (11) der Sensorvorrichtung (1) umgibt, und
- das Anschlussmittel (3) ein Außengewinde (31) umfasst, welches die Durchgangsbohrung (32) umgibt, wobei das Außengewinde (31) dazu ausgebildet ist, die in der Wand (22) der Hülle (21) des Behälters (2) vorgesehene Öffnung (23) zu umgeben, wobei das Außengewinde (31) dazu ausgebildet ist, um mit dem Innengewinde (T16) des Befestigungsmittels (16) zusammenzuwirken, um die lösbare Befestigung der Sensorvorrichtung (1) am Anschlussmittel (3) durch Ein-/Ausschrauben sicherzustellen.

14. Anordnung nach einem der Ansprüche 12 oder 13, mit einer Sensorvorrichtung (1) nach Anspruch 7, in welcher das Anschlussmittel (3) ein Erfassungselement (51) umfasst, welches, zumindest teilweise, aus magnetischem Material besteht und dazu ausgebildet ist, ein Magnetfeld auszusenden, geeignet, um von dem Magnetfeldmessmittel (5) der Sensorvorrichtung (1) gemessen zu werden, wenn die Sensorvorrichtung (1) am Anschlussmittel (3) befestigt ist, wobei vorzugsweise:
- das Magnetfeldmessmittel (5) in der Nähe des Innengewindes (T16) des Befestigungsmittels (16) angeordnet ist,
- das Erfassungselement (51) in der Nähe des Außengewindes (31) angeordnet ist, welches die Durchgangsbohrung (32) umgibt.

15. System, umfassend:
- eine Anordnung nach einem der Ansprüche 12 bis 14,
- einen Behälter (2), umfassend eine dichte Hülle (21), wobei die Hülle (21) eine Wand (22) umfasst, wobei die Hülle (21) dazu geeignet ist, Material (M) im Inneren zu fassen, wobei das Material (M) vorzugsweise ein instabiles Material ist, welches Eigenschaften aufweist, die sich im Laufe der Zeit verändern, wie Hefe oder Sauerteig, wobei der Behälter ferner eine in der Wand (22) der Hülle (21) vorgesehene Öffnung (23) umfasst, welche dazu ausgebildet ist, um das Innere und das Äußere der Hülle (21) miteinander zu verbinden,
wobei das Anschlussmittel (3) mit der Wand (22) der Hülle (21) fest verbunden ist,
wobei seine Durchgangsbohrung (32) gegenüber und in Verlängerung der Öffnung (23) des Behälters (2) angeordnet ist,
und wobei die Sensorvorrichtung (1) lösbar am Anschlussmittel (3) befestigt ist,
wobei ihr Messfenster (15) in Verlängerung der Durchgangsbohrung (32) des Anschlussmittels (3) und der Öffnung (23) des Behälters (2) angeordnet ist, so dass der Sender (13) des Füllstandssensors (12) dazu geeignet ist, das Erfassungssignal (S13) in das Innere der Hülle (21) des Behälters (2) auszusenden, und der Empfänger (14) des Füllstandssensors (12) dazu geeignet ist, das reflektierte Erfassungssignal (S14) nach Reflexion an der freien Oberfläche (SL) des Materials (M) im Inneren der Hülle (21) des Behälters (2) zu empfangen, wobei die Öffnung (23) vorzugsweise in einer oberen Wand (22S) der Hülle (21) vorgesehen ist und die Sensorvorrichtung (1) an einer oberen Wand (22S) der Hülle (21) des Behälters (2) befestigt ist.

16. System nach dem vorangegangenen Anspruch, umfassend eine Anordnung mit einer Sensorvorrichtung (1) nach Anspruch 8, wobei ein RFID-Transponder (7), umfassend einen Speicher mit Daten bezüglich des Behälters (2), an der Hülle (21) des Behälters (2) befestigt ist.

17. Verfahren zur Konfiguration einer Sensorvorrichtung, welche zu einem System nach Anspruch 16 gehört, wobei das Verfahren durch das System nach dem vorangegangenen Anspruch ausgeführt wird, wobei das Verfahren umfasst:
- Abfragen des RFID-Transponders (7), welcher an der Hülle des Behälters befestigt ist, um Informationen bezüglich des Behälters durch Auslesen des Speichers des an der Hülle des Behälters befestigten RFID-Transponders (7) zu erhalten,
- Empfangen der Informationen bezüglich des Behälters durch den RFID-Transponder (6) der Sensorvorrichtung, um sie in dem Speicher des RFID-Transponders (6) der Sensorvorrichtung zu speichern,
- Übertragen, über mindestens eine drahtgebundene Verbindung, der gespeicherten Informationen bezüglich des Behälters, welche im Speicher des RFID-Transponders (6) gespeichert sind, an die elektronischen Steuerungsmittel und/oder den Datensender und/oder den Datenempfänger der Sensorvorrichtung.

18. Verfahren nach dem vorangegangenen Anspruch, in welchem ein RFID-Lesegerät verwendet wird, um den an der Hülle befestigten RFID-Transponder (7) derart abzufragen, um Informationen bezüglich des Behälters zu erhalten, und verwendet wird, um die Informationen bezüglich des Behälters an den RFID-Transponder (6) der Sensorvorrichtung zu übermitteln.

19. Verfahren nach einem der vorangegangenen Ansprüche 17 oder 18, in welchem die Informationen bezüglich des Behälters ausgewählt sind aus einer eindeutigen Kennung des Behälters, einem Volumen und/oder mindestens einer Abmessung des Behälters.

20. Verfahren (200) zur Fernüberwachung von Informationen bezüglich eines Behälters (2), der eine dichte Hülle (21) umfasst, welche dazu geeignet ist, instabiles Material (M) zu fassen, wobei das instabile Material (M) Eigenschaften aufweist, welche sich im Laufe der Zeit verändern, mit Hilfe einer Sensorvorrichtung (1) nach einem der Ansprüche 1 bis 11, wobei das Verfahren umfasst:
die Messung (201) des Füllstands des Materials (M) im Inneren der Hülle (21) des Behälters (2),
die Erzeugung (202) von repräsentativen Daten des Füllstandes des Materials (M) im Inneren der Hülle (21) des Behälters (2),
die Übertragung (203) der repräsentativen Daten des Füllstandes des Materials (M) im Inneren der Hülle (21) des Behälters (2).

21. Verarbeitungsschaltung (300), welche ausgebildet ist, ein Verfahren nach Anspruch 19 und/oder Anspruch 20 auszuführen.

22. Speichereinheit (302), welche von einem Prozessor lesbar ist, umfassend Anweisungen (303), welche, wenn sie von dem Prozessor ausgeführt werden, diesen dazu veranlassen, das Verfahren nach Anspruch 19 und/oder Anspruch 20 auszuführen.

## Claims

1. Sensor device (1) for measuring the level of material (M) in a container (2), the container (2) comprising a sealed envelope (21) configured to contain material (M) defining a free surface (SL) of a liquid inside the envelope (21),
the sensor device (1) comprising:
- a shell (11),
- at least one contactless level sensor (12), comprising a transmitter (13) configured to transmit a detection signal (S13), and a receiver (14) configured to receive a reflected detection signal (S14), the reflected detection signal (S14) comprising the detection signal (S13) after reflection, said level sensor (12) being accommodated inside the shell (11),
wherein the shell (11) comprises a measurement window (15) allowing the passage of the detection signal (S13) transmitted by said transmitter (13) from the inside of the shell (11) to the inside of the envelope (21) of the container (2) and the passage of the reflected detection signal (S14), after reflection against the free surface (SL) of the material (M) inside the envelope (21) of the container (2), from the inside of the envelope (21) of the container (2) to said receiver (14) inside the shell (11),
the sensor device (1) further comprising a fastening means (16) integral with the shell (11), configured so as to allow the removable fastening of the sensor device (1), outside of the envelope (21) of the container (2), on a connection means (3) integral with a wall (22) of the envelope (21) of the container (2), with the measurement window (15) of the shell (11) positioned opposite a corresponding opening (23) formed in the wall (22) of the envelope (21) of the container (2),
the level sensor (12) being configured to transmit a measurement signal relative to the level of the material (M) inside the envelope (21) of the container (2) according to the reflected detection signal (S14) received by the receiver (14),
**characterised in that**:
- the transmitter (13) is configured so as to transmit a detection signal (S13) comprising a plurality of transmission light rays (R13₁... R13ₙ) advantageously having a common origin (O13) at the transmitter (13), at least two transmission light rays (R13₁... R13ₙ) each having a different orientation with respect to said transmitter (13), and in particular so that all of the transmission light rays (R13₁... R13ₙ) substantially form an origin cone (O13), and so that the reflected detection signal (S14) received by the receiver (14) comprises a plurality of reflected detection light rays (R14₁... R14ₙ), each formed by a transmission light ray (R13₁... R13ₙ) of the detection signal (S13) transmitted by the transmitter (13) after at least one reflection against a wall (22, 24) of the envelope (21) of the container (2) and/or against the free surface (SL) of the material (M) inside the envelope (21) of the container (2),
- the receiver (14) comprises a plurality of receiving units (P14₁... P14ₙ) distributed evenly over a substantially planar surface (F14) oriented towards the measurement window (15), and configured so as to receive only one single reflected detection ray (R14₁... R14ₙ) of the reflected detection signal (S14), the receiver (14) being configured so as to transmit as many measurement signals (M14₁... M14ₙ) as there are receiver units (P14₁... P14ₙ), possibly distinct, each determined according to the single reflected detection ray (R14₁... R14ₙ) received at each receiving unit (P14₁... P14ₙ),
- the measurement signal transmitted by said level sensor (12) relating to the level of the material (M) inside the envelope (21) of the container (2) being determined according to the different measurement signals (M14₁... M14ₙ) transmitted by the receiver (14) determined on the basis of the different receiving units (P14₁... P14ₙ).

2. Device (1) according to claim 1, wherein the fastening means (16) comprises an internal thread (T16) surrounding said measurement window (15), the internal thread (T16) being configured to cooperate by screwing/unscrewing with a thread (31) of the connection means (3), the thread (31) being configured to surround the opening (23) of the container (2).

3. Device (1) according to one of claims 1 to 2, further comprising a geolocation means (17) configured to transmit a signal allowing determining the geographic position of the sensor device (1).

4. Device (1) according to one of claims 1 to 3, comprising a user interface (4) connected to said level sensor (12), the user interface (4) comprising a display (41) configured so as to display a piece of information relative to the level of material (M) inside the envelope (21) of the container (2) dependent on the measurement signal transmitted by said level sensor (12), preferably the display (41) comprises a plurality of light-emitting diodes (42) associated with a plurality of inscriptions (43) and the user interface (4) comprises at least one actuation button (44), connected to the display (41), the actuation button (44) being configured to trigger a measurement of level of the material (M) inside the envelope (21) of the container (2) by the level sensor (12) and the display of a piece of information relative to the level of material (M) inside the envelope (21) of the container (2).

5. Device (1) according to one of claims 1 to 4, further comprising a data transmitter, configured so as to send data from the level sensor (12) to a remote server, preferably via a low-bandwidth cellular network on a frequency between 800MHz and 1000MHz, the data comprising data relative to the level of material (M) inside the envelope (12) of the container (2) established on the basis of the measurement signal transmitted by the level sensor (12).

6. Device (1) according to one of claims 1 to 5, further comprising a temperature sensor (18), configured so as to measure the ambient temperature of the device (1).

7. Device (1) according to one of claims 1 to 6, further comprising a means for measuring the magnetic field (5) configured to transmit a measurement signal relative to the magnetic field in the vicinity of said means for measuring the magnetic field (5), said means for measuring the magnetic field (5) being advantageously integral with the shell (11), and in particular positioned at the fastening means (16).

8. Device (1) according to one of claims 1 to 7, further comprising an RFID transponder (6) comprising a memory with data relative to the sensor device (1).

9. Device (1) according to one of claims 1 to 8, wherein:
- the transmitter (13) is configured to transmit an optical detection signal (S13), at least one lens (E19) being interposed between the transmitter (13) and the measurement window (15),
- the receiver (14) is configured to receive an optical reflected detection signal (S14), at least one lens (E19) being interposed between the receiver (14) and the measurement window (15).

10. Device (1) according to one of claims 1 to 9, wherein an optical separation wall (P12) separates the transmitter (13) from the receiver (14), said optical separation wall (P12) being configured so as to prevent an optical detection signal (S13) transmitted by said receiver (13) from reaching said receiver (14) without having passed through said measurement window (15) so as to exit the shell (11).

11. Device (1) according to any one of the preceding claims, wherein the measurement signal transmitted by the level sensor (12) relative to the level of the material (M) inside the envelope (21) of the container (2) is determined by:
/a/ considering a first amount (Q1) of measurement signals (M14₁... M14ₙ) transmitted by the receiver (14) determined on the basis of a first amount (Q1) of receiving units (P14₁... P14ₙ), such that each of said measurement signals (M14₁... M14ₙ) of said first amount (Q1) corresponds to a travel time of a transmission light ray (R13₁... R13ₙ) reflected only by the free surface (SL) of the material (M) in the envelope (21) of the container (2) before forming a reflected detection light ray (R14₁... R14ₙ), each of said measurement signals (M14₁... M14ₙ) of the first amount (Q1) being advantageously substantially identical,
/b/ considering a second amount (Q2) of measurement signals (M14₁... M14ₙ) transmitted by the receiver (14) determined on the basis of a second amount (Q2) of receiving units (P14₁... P14ₙ), such that each of said measurement signals (M14₁... M14ₙ) of said second amount (Q2) corresponds to a travel time of a transmission light ray (R13₁... R13ₙ) reflected by at least one wall (24), and in particular a side wall (24), of the envelope (21) and by the free surface (SL) of the material (M) in the envelope (21) of the container (2), before and/or after being reflected by said wall (24) of the envelope (21), before forming a reflected detection light ray (R14₁... R14ₙ), and strictly greater than the travel time corresponding to the measurement signals (M14₁... M14ₙ) of the first amount (Q1), each of said measurement signals (M14₁... M14ₙ) of the second amount (Q2) advantageously being different from the measurement signals (M14₁... M14ₙ) of the first amount (Q1),
/c/ discriminating the measurement signals (M14₁... M14ₙ) of the second amount (Q2) of measurement signals (M14₁... M14ₙ) and by taking into account only the measurement signals (M14₁... M14ₙ) of the first amount (Q1) of measurement signals (M14₁... M14ₙ) to determine the measurement signal transmitted by the level sensor (12), for example by averaging the measurement signals (M14₁... M14ₙ) of the first amount (Q1).

12. Assembly comprising:
- a sensor device (1) according to one of claims 1 to 11,
- a connection means (3), capable of being secured to a wall (22) of the envelope (21) of a container (2),
wherein the connection means (3) has a through-hole (32) provided to be positioned opposite and in the extension of an opening (23) formed in said wall (22) of the envelope (21) of the container (2),
and wherein the sensor device (1) is configured to be removably fastened on the connection means (3) via its fastening means (16) with the measurement window (15) of its shell (11) opposite and in the extension of the through-hole (32) of the connection means (3) and the opening (23) formed in the wall (22) of the envelope (21) of the container (2), said through-hole (32) being configured to be passed through by the detection signal (S13) transmitted by the transmitter (13) and by the reflected detection signal (S14) intended to be received by the receiver (14).

13. Assembly according to claim 12, wherein:
- the fastening means (16) of the sensor device (1) comprises an internal thread (T16) surrounding the measurement window (15) of the shell (11) of the sensor device (1) and
- the connection means (3) comprises a thread (31) surrounding said through-hole (32), the thread (31) being configured to surround the opening (23) formed in the wall (22) of the envelope (21) of the container (2), the thread (31) being configured to cooperate with said internal thread (T16) of the fastening means (16) to ensure the removable fastening of the sensor device (1) on said connection means (3) by screwing/unscrewing.

14. Assembly according to one of claims 12 or 13, with a sensor device (1) according to claim 7, wherein the connection means (3) comprises a detection element (51) made, at least partially, of magnetic material, configured to transmit a magnetic field capable of being measured by said means for measuring the magnetic field (5) of the sensor device (1) when said sensor device (1) is fastened to said connection means (3), preferably wherein
- the means for measuring the magnetic field (5) is positioned near the internal thread (T16) of the fastening means (16),
- the detection element (51) is positioned near the thread (31) surrounding said through-hole (32).

15. System comprising:
- an assembly according to one of claims 12 to 14,
- a container (2) comprising a sealed envelope (21), the envelope (21) comprising a wall (22), the envelope (21) being capable of containing material (M) inside, preferably the material (M) is an unstable material having characteristics that change over time such as yeast or leaven, the container further comprising an opening (23) formed in the wall (22) of the envelope (21), the opening (23) being configured to connect the inside and the outside of the envelope (21),
and wherein the connection means (3) is secured to the wall (22) of the envelope (21) with its through-hole (32) opposite and in the extension of the opening (23) of the container (2),
and wherein the sensor device (1) is removably fastened to the means for connection (3) with its measurement window (15) in the extension of the through-hole (32) of the connection means (3) and the opening (23) of the container (2), so that the transmitter (13) of the level sensor (12) is capable of transmitting the detection signal (S13) towards the inside of the envelope (21) of the container (2) and the receiver (14) of the level sensor (12) is capable of receiving said reflected detection signal (S14), after reflection against the free surface (SL) of the material (M) inside the envelope (21) of the container (2), preferably wherein the opening (23) is formed in an upper wall (22S) of the envelope (21) and the sensor device (1) is fastened on an upper wall (22S) of the envelope (21) of the container (2).

16. System according to the preceding claim, comprising an assembly with a sensor device (1) according to claim 8, wherein an RFID transponder (7) comprising a storage memory with data relative to the container (2) is fastened on the envelope (21) of the container (2).

17. Method for configuring a sensor device belonging to a system according to claim 16, the method being implemented by the system according to the preceding claim, the method comprising:
- interrogating the RFID transponder (7) fastened on the envelope of the container to obtain information relative to the container by reading the memory of the RFID transponder (7) fastened on the envelope of the container,
- the RFID transponder (6) of said sensor device receiving the information relative to the container to store it in the memory of said RFID transponder (6) of said sensor device,
- transmitting, by at least one wired link, the information relative to the container which is stored in the memory of said RFID transponder (6) to the electronic control means and/or to the data transmitter and/or to the data receiver of said sensor device.

18. Method according to the preceding claim, wherein an RFID reader is used to interrogate the RFID transponder (7) fastened on the envelope so as to retrieve information relative to the container, and is used to communicate said information relative to the container to the RFID transponder (6) of said sensor device.

19. Method according to one of the preceding claims 17 or 18, wherein the information relative to the container is chosen from a unique identification reference of said container, a volume and/or at least one dimension of said container.

20. Method (200) for remotely monitoring information relative to a container (2) comprising a sealed envelope (21) capable of containing unstable material (M), the unstable material (M) having characteristics that change over time, using a sensor device (1) according to one of claims 1 to 11, the method comprising:
measuring (201) the level of material (M) inside the envelope (21) of the container (2), generating (202) data representative of the level of material (M) inside the envelope (21) of the container (2),
transmitting (203) the data representative of the level of material (M) inside the envelope (21) of the container (2).

21. Processing circuit (300) configured to execute a method according to claim 19 and/or claim 20.

22. Memory unit (302) readable by a processor, comprising instructions (303) which, when executed by the processor, cause the processor to implement the method according to claim 19 and/or claim 20.
